# EUROPEAN PATENT SPECIFICATION

(11) **EP 0 883 276 B1**
(45) Date of publication and mention of the grant of the patent: **27.08.2008**
(21) Application number: 98110368.2
(22) Date of filing: 05.06.1998
(51) Int. Cl.: H04N 1/00, H04N 1/333

(54) **Image communication systems and communication control methods**
Bildkommunikationssysteme und Kommunikationssteuerungsverfahren
Systèmes de communication d'image et procédés de commande de communication

(30) Priority: 06.06.1997 JP 16537097
(43) Date of publication of application: 09.12.1998
(73) Proprietor: CASIO COMPUTER CO., LTD., Shibuya-ku, Tokyo 151-8543 (JP)
(72) Inventor: Arai, Tatsuo, c/o Hamura R&D Center, Hamura-shi, Tokyo, 205-8555 (JP)
(74) Representative: Grünecker, Kinkeldey, Stockmair & Schwanhäusser Anwaltssozietät

(56) References cited:
- GB-A- 2 256 558
- US-A- 4 000 371
- US-A- 5 392 133
- US-A- 5 473 441
- US-A- 5 528 293

## Description

The present invention relates to image communication systems and communication control methods for the systems, and more particularly to an image communication system which transfers image data in a selected one of a plurality of data types from a transmitting end device to a receiving end device and a communication control method for such system.

Conventionally, image communication systems are known which transfer image data by cable or radio from transmitting end devices such as, for example, digital cameras, to receiving end devices such as, for example, printers.

In one such image communication system, the transmitting and receiving end devices are beforehand dedicated wherein the transmitting end device transmits image data in a predetermined specified data size to the receiving end device or the receiving end device transmits to the transmitting end device information on data sizes receivable by the receiving end device. The transmitting end device in turn selects a transmittable data size from among the information on the receivable data sizes and transmits image data in the selected data size to the receiving end device.

However, such conventional image communication system has the following problems. As described above, since the receiving end device is arranged to report only information on the receivable data sizes to the transmitting end device when image data is to be transferred from the transmitting end device to the receiving end device, the transmitting end device selects a data size, for example, in the highest image quality from among transmitting end-transmittable data sizes contained in the receivable data sizes and transmits to the receiving end device the image data in the selected data size. However, it is the receiving end device that receives the transmitted image data and actually performs various processes (for example, edition, printing, etc.) on the received image data. The data size set at the transmitting end is not necessarily a data size appropriate for a process performed on the received image data at the receiving end device.

For example, let's consider an image communication system which includes a digital camera which picks up an image and a printer which prints input image data in a color on predetermined paper.

Assume now that the digital camera picks up an image and stores same in a memory as image data of a VGA (Video Graphics Array) size of a 640 × 480 pixel graphics display, and transmits the image data stored in the memory in the VGA size or a Q-VGA size (Quarter VGA having an aspect ratio of 1/2 to the VGA, that is, its whole size is 1/4 of the VGA size) of 320 × 240 pixel graphics display via a communication cable to an external device. That is, when the digital camera transmits image data of the VGA size stored in a memory in the Q-VGA size to the receiving end device, it converts the image data to that of the Q-VGA size, which is then transmitted.

The printer is capable of receiving image data of the VGA or Q-VGA size via the communication cable, and prints the image data in colors on predetermined printing paper on the basis of the image data of the Q-VGA size. That is, when receiving the image data of the VGA size, the printer converts the image data to that of the Q-VGA size, and then performs a printing process.

The reason why the digital camera is capable of transmitting image data of the VGA size to the printer is that the digital camera is intended to also transmit image data of the VGA size to an external device such as the printer which is capable of only receiving image data of the VGA size. Similarly, the reason why the printer is capable of receiving image data of the VGA size is that the printer is intended to be capable of receiving image data from a device such as the digital camera which is capable of only transmitting image of the VGA size, and then performs a printing process.

When the digital camera transmits image data to the printer in such image communication system, first, the printer informs the digital camera that the printer is capable of receiving image data of the VGA and Q-VGA size. In response to this operation, the digital camera transmits to the printer image data in the VGA size which has a higher picture quality than the Q-VGA size whereas the printer converts the received image data of the VGA size to that of the Q-VGA size, and prints this data in colors on printing paper.

The image data of the VGA size has four times an amount of the image data of the Q-VGA size. In addition, the printer is capable of only printing image data of the Q-VGA size. However, the digital camera transmits image data of the VGA size. Thus, the communication time required for the image data increases correspondingly and the printer is required to convert the received image data of the VGA size to that of the Q-VAG size, which would give an unnecessary wait time to the user, and hence corresponding power consumption of the digital camera and the printer would be invited.

In order to avoid such problems, you may say that the digital camera which is capable of transmitting the image data both in the VGA and Q-VGA sizes should transmit image data preferentially in the Q-VGA size to an external device at the receiving end device if this external device is capable of receiving the image data of the two sizes. However, you cannot make that kind of sweeping generalization.

For example, when the printer connected to the digital camera is capable of printing image data of both the Q-VGA and VGA sizes in colors on predetermined printing paper, and the print sizes are the same, printing the image data of the VGA size will usually provide a higher quality print than the Q-VGA size. However, if the digital camera preferentially transmits the image data in the Q-VGA size, such printing performance of the printer cannot be utilized sufficiently. US patent 4,000,371 describes a facsimile apparatus that is adapting the format of image data to be sent to the receiver's capabilities of handling this data format. In particular, this reference describes a protocol for negotiating a communication mode, which comprises the resolution of the transmitted image data. According to this reference, the receiver transmits a list of possible communication modes to the transmitter. These communication modes are considered as having a predetermined priority arrangement. The transmitter is thus selecting the communication mode with the highest priority from among the received list of possible communication modes. However, due to the predetermined priority arrangement, the optimum data format cannot always be selected.

As described above, in the conventional image communication system, it is impossible to transfer image data in an optimal data size in consideration of a process, etc., which will be performed at the receiving end device. As result, an unnecessary wait time would be given to the user and/or wasteful power consumption of the transmitting and receiving end devices would be invited. In order to transfer image data in an optimal data size, it is necessary to set image data manually in an appropriate data size in the transfer. That is, the conventional image communication system is complicated in operation and is not easy to use.

It is thus the aim of the present invention to provide an image communication system with improved operation and corresponding methods therefore.

This is achieved by the features of the independent claims. Preferred embodiments are the subject matter of dependent claims.

In those embodiments, the transmitter is capable of transmitting to the receiver the image data in an optimal data type in consideration of the processing performed on the image data in the receiver and the image quality level of the image data stored in the transmitter to be transmitted to the receiver. As a result, a possible wasteful communication time which would otherwise be produced is eliminated, the image data is transmitted rapidly, no manual setting of the data type is required in transferring the image. That is, the handiness of this system is improved. Elimination of the wasteful communication time serves to suppress power consumption of the transmitter and receiver.
FIG. 1 is a perspective view of an image communication system 1 according to the present invention in which a digital camera 2 is connected via a communication table 4 to a printer 3;
FIG. 2 is a block diagram of an internal composition of the digital camera 2;
FIG.3 illustrates a data-type conversion table 34a developed in a RAM 34 of FIG. 2;
FIR. 4 is a block diagram of an internal composition of the printer 3;
FIG. 5 illustrates a reception data-type storage table 56a developed in a RAM 56 of FIG. 4;
FIG. 6 is a block diagram of a color printing unit 58 of FIG. 4;
FIG. 7 is a flow chart of a main control process 1 performed by a CPU 57 of FIG. 4;
FIG. 8 is a flow chart of a reception control process performed as a subroutine of a main control process 1 of FIG. 7 by the CPU 57;
FIG. 9 is a flow chart of a transmission control process 1 performed by a CPU 36 of FIG. 2;
FIG. 10 illustrates a communication process in which image data is transferred from the digital camera 2 to the printer 3 in the transmission control process 1 of FIG. 9 performed by the camera 2 and in the reception control process 1 of FIG. 8 performed by the printer 3;
FIG. 11 is a block diagram of an internal composition of a digital camera 7 of a second embodiment;
FIG. 12 illustrates a data-type conversion table 62a developed in a RAM 62 of FIG. 11;
FIG. 13 is a block diagram of an internal composition of a printer 8 in the second embodiment;
FIG. 14 illustrates a receiving data type storage table 72a developed in a RAM 72 of FIG. 13;
FIG. 15 is a flow chart of a main control process 2 performed by a CPU 73 of FIG. 13;
FIG. 16 shows a part 1 of the flow chart of the main control process 2 performed by a CPU 63 of FIG. 11; and
FIG. 17 shows a part 2 of the flow chart of the main control process 2.
   A preferred embodiment of an image communication system according to the present invention will be described in detail in reference to the accompanying drawings.
Fig. 18 is a block diagram of an image communication system 6 according to the present invention in which a digital camera 7 is connected via infrared rays to a printer 8;

### (First Embodiment)

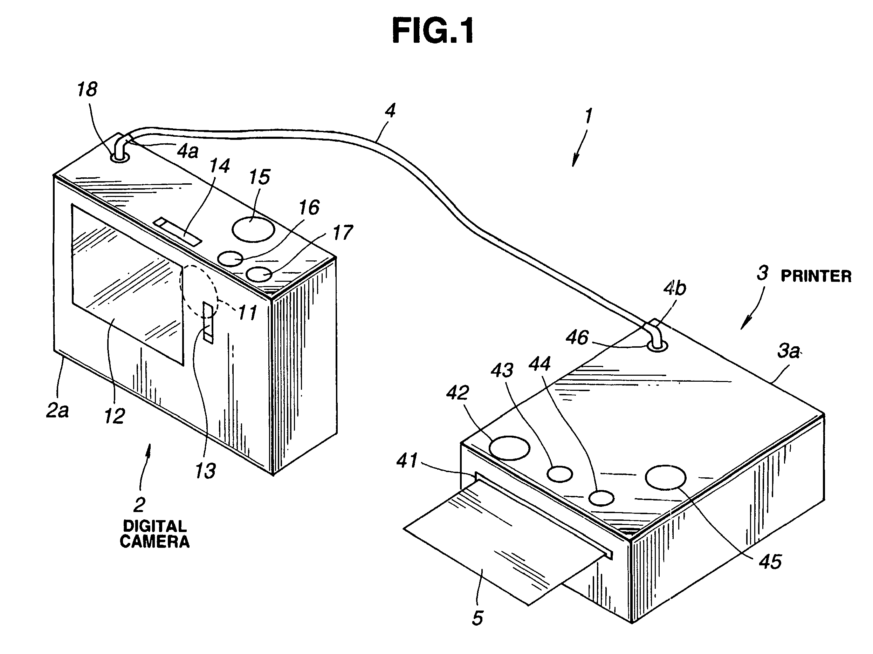

The composition of the image communication system of the preferred embodiment will be described. FIG. 1 is a perspective view of the image communication system 1 according to the present invention in which a digital camera 2 (electronic still camera) is connected via a communication cable 4 to a printer 3.

First, the digital camera 2 will be described. The digital camera 2 has an image pickup lens 11 (shown by a broken line) on a back of a casing 2a. The digital camera 2 also has a display unit 12 composed, for example, of a liquid crystal display (LCD) on a front side of the casing 2a. The display unit 12 displays an image of a subject picked up via the pickup lens 11 in the pickup operation and reproduces and displays the picked-up image. A mode change switch 13 is provided on the right of the display 12 to select one of a pickup mode, a reproduce mode and a communicate mode by sliding the switch 13 vertically.

Provided on an upper surface of the casing 2a are a power switch 14 which turns on/off a power supply by sliding horizontally, a shutter key 15 which instructs the camera to pick up an image, "+" and "-" keys 16 and 17 to select and specify image data to be reproduced/displayed on the display 12 from among a plurality of image data stored in a memory (flash memory 31 to be described later in more detail).

Provided on the upper surface of the casing 2a is a serial input/output terminal 18 to transmit/receive image data, control data, etc., between the digital camera and an external device with the input/output terminal 18 receiving a plug 4a provided at one end of the communication cable 4.

The digital camera 2 is composed of a camera unit with the image pickup lens 11 and a body relative to which the camera unit and hence the pickup lens 11 are freely rotatable and removable.

The printer will be described nest. In FIG. 1, the printer 3 has a paper insert/discharge port 41 on a front of a casing 3a thereof with the port 41 being used as an entrance through which predetermining printing paper 5 is inserted into the printer body and as an exit through which the printed paper 5 is discharged from the printer 3 to the outside.

Provided on an upper surface of the casing 3a are a power supply switch 42 which turns on/off a power supply of the printer, "+" and "-" keys 43 and 44 which select and specify image data to be gotten from a plurality of image data stored in the memory (flash memory 31) of the digital camera 2, and a print key 45 which commands determination of an image to be selected and printing of the gotten image on the printing paper 5.

Provided backward on the upper surface of the casing 3a is a serial input/output terminal 46 through which image data, control data, etc., are transmitted/received between the printer 3 and an external device (camera 2) with the terminal 46 receiving a plug 4b provided at the other end of the communication cable 4.

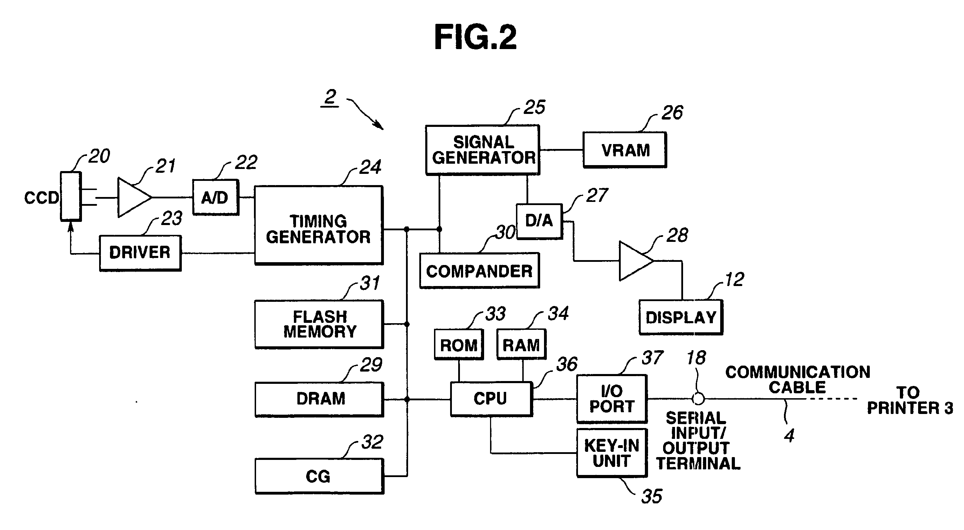

FIG. 2 is a block diagram of the digital camera 2 of FIG. 1, which is capable of producing image data of the VGA type on the basis of the picked-up image, and storing the image data in a memory (flash memory 31), and transmitting the image data in the VGA, Q-VGA or S-VGA type via the communication cable 4 to an external device (printer 3). When the image data is transmitted in the Q-VGA or S-VGA type, the image data of the VGA type stored in the memory is converted to that of the Q-VAG or S-VGA, which is then transmitted.

The digital camera 2 of FIG. 2 is composed of the display unit 12 of FIG. 1, a CCD 20, a buffer 21, an A/D converter 22, a driver 23, a timing generator 24, a signal generator 25, a VRAM 26, a D/A converter 27, a buffer 28, a DRAM 29, a compander 30, a flash memory 31, a CG 32, a ROM 33, a RAM 34, a key-in unit 35, a CPU 36, and an I/O port 37.

The CCD (Charge Coupled Device) 20 is composed of a pixel face in which many pixels each composed of a pair of superposed photo-detection element and transfer electrode are disposed, and an output unit which converts charges stored in the respective pixels to corresponding voltages, and which then outputs those voltages. Light entering via the image pickup lens 11 into the CCD is received by the pixel surface, electric charges proportional to the received quantities of light at the respective pixels are stored in the corresponding pixels. The electric charges stored in the respective pixels are sequentially read out in units of a pixel as an electrical signal by the output unit in accordance with a drive signal delivered by the driver 23, and are delivered as an image pickup signal (analog signal) via the buffer 21 to the A/D converter 22.

The A/D (Analog to Digital) converter 22 converts the delivered analog signal to a digital signal, which is then delivered to the timing generator 24.

The driver 23 controls the timing of exposing and reading out of the CCD 20 on the basis of the timing signal delivered from the timing generator 24, which generates the timing signal which controls the driver 23 on the basis of a video getting signal received from the CPU 36.

The signal generator 25 performs a color operating process on the image pickup (digital) signal received via the timing generator 24, produces image data of the VGA type composed of a luminescence signal (Y data) and a color signal (C data), and delivers the image data to the DRAM 29.

The signal generator 25 adds a sync to the image data of the VGA type delivered from the DRAM 29 by the CPU 36 to produce a (digital) video signal, and then stores the video signal temporarily in the VRAM 26. The video signal stored in the VRAM 26 is and then delivered via the A/D converter 27 and buffer 28 to the display 12.

The VRAM (video Random Access Memory) 26 is a video memory which temporarily stores a video signal (image data) produced by the signal generator 25.

The D/A (Digital to Analog) converter 27 converts the digital video signal (image data) delivered from the VRAM 26 by the signal generator 25 to an analog signal, which is then delivered via the buffer 28 to the display unit 12.

The display unit 12 is composed, for example, of a liquid crystal display, which displays an image based on a video signal (image data) received via the D/A converter 27 and the buffer 28.

The DRAM (Dynamic Random Access Memory) 29 is a semiconductor memory which temporarily stores picked-up image data of the VGA type delivered from the signal generator 25 or image data of the VGA type read out from the flash memory 31 by the CPU 36 and expanded by the compander 30 to be described later.

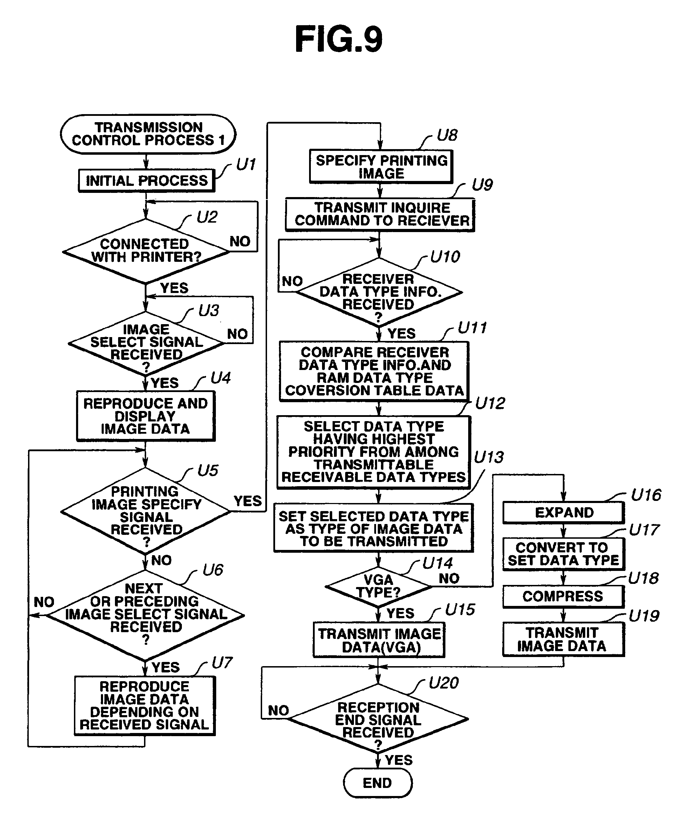

The compander 30 compresses by encoding the image data of the VGA type stored in the DRAM 29. More specifically, it process the image data in a predetermined encoding process, for example, including a DCT (Discrete Cosine Transform) of the image data in units of 8□$B!_□(B8 pixels in a JPEG (Joint Photographic Experts Group) algorithm, quantization, and Huffman coding, depending on a type of the image (in this case, a still picture) to be handled, and delivers the compressed image data of the VGA type to the flash memory 31. Similarly, image data of the Q-VGA and S-VGA types to be transmitted to the printer 3 (external device) in the transmission control process 1 (FIG. 9) to be described later in more detail are compressed and delivered to the I/O port 37. The compander 30 decodes the compressed image data of the VGA type stored in the flash memory 31, expand the decoded image data and transmits the resulting image data to the DRAM 29.

The flash memory 31 is a semiconductor memory which stores a plurality of image data of the VGA type each compressed by the compander 30 and its plurality of storage number data which are placed in corresponding relationship in storage order.

The CG (Character Generator) 32 is a memory which contains character data such as, for example, operation guidance kana letters, alphanumeric characters and symbols, displayed on the display 12.

The ROM (Read Only Memory) 33 contains various control programs each in the form of program codes readable by the CPU 36 for control of the respective elements of the digital camera 2 executed by the CPU 36, for example, in the transmission control process 1 (FIG. 9).

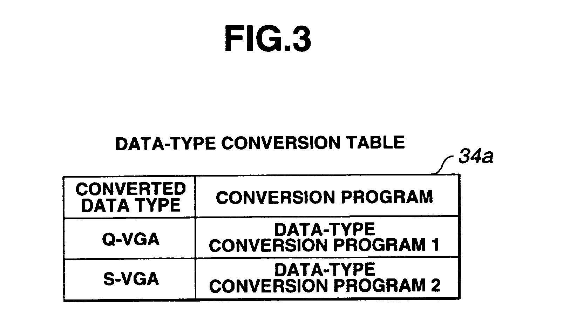

The ROM 33 also contains a data-type conversion program which converts the image data of the VGA type stored in the flash memory 31 to image data of Q-VGA type or S-VGA (Super VGA) type in which a maximum of 256 different colors is displayed simultaneously in a graphics display of 1024 x 786 pixels and further contains a data-type conversion table 34a (FIG. 3) to be developed in the RAM 34 and to be described later in more detail.

The RAM (Random Access Memory) 34 forms a work area which temporarily stores various data to be processed when various control processes are executed by the CPU 36. A data-type conversion table 34a read out from the ROM 33 by the CPU 36 is developed in the RAM 34.

FIG. 3 illustrates one example of the data-type conversion table 34a to be developed in RAM 34. In the table 34a, a "converted data type" column contains type names of image data (in the present embodiment, Q-VGA, S-VGA) to which the type (VGA) of the image data stored in the flash memory 31 as a conversion source is convertible (transmittable) by the camera 2, and a "conversion program" column contains program names of data-type conversion programs in charge of type conversion corresponding to the respective type names of image data in the "converted data type" column.

The key-in unit 35 is composed of the mode change switch 13, power supply switch 14, shutter key 15 "+" key 16 and "-" key 17, and outputs and delivers to the CPU 36 a signal depending on depression or sliding of a respective one of the keys.

The CPU (Central Processing Unit) 36 controls the respective elements of the digital camera 2 in accordance with various control programs contained in the ROM 33. Specifically, the CPU 36 is responsive to specifying of a communicate mode by sliding the mode change switch 13 to perform the transmission control process 1 (FIG. 9).

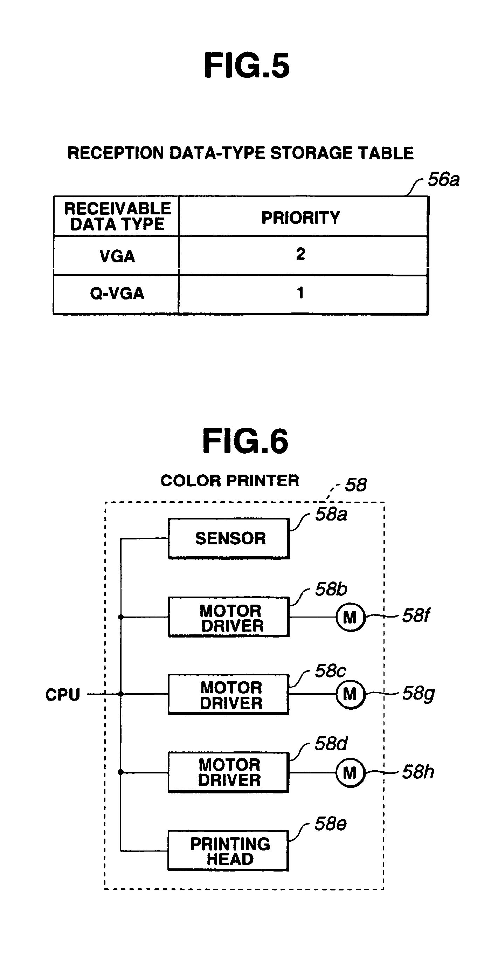

In the transmission control process 1, the CPU 36 receives receiving-end data type information (receivable data type name and its priority data, FIG. 5) via the I/O port 37 from the printer 3, compares the receiving-end data type information and the "converted data type" column data of the data-type conversion table 34a (FIG. 3) developed in the RAM 34 to select a data type of the highest priority from among data types convertible (transmittable) by the digital camera 2 and receivable by the printer 3, and sets the data type as that of the image data to be transmitted. The CPU 36 then refers to the data-type conversion table 34a, reads out a data-type conversion program corresponding to the set data type from the ROM 33, converts the type of the image data to be transmitted to the set data type, and then transmits this image data via the I/O port 37 to the printer 3.

When the shutter key 15 is depressed in the image pickup mode, the CPU 36 delivers a video get signal to the timing generator 24, which generates a timing signal in accordance with the video get signal, and delivers the timing signal to the driver 23. The driver 23 controls timings for exposing and reading out the CCD 20 in accordance with the timing signal, and gets an image pickup signal from the CCD 20. The A/D converter 22 converts the gotten analog image pickup signal to a digital signal. The signal generator 25 performs a color operating process on the image pickup signal to produce image data of the VGA type, and stores same in the DRAM 29. The CPU 36 transfers the image data stored in the DRAM 29 to the compander 30 to compress the image data, and the compressed image data (of the VGA type) in the flash memory 31.

When a reproduce mode is specified by sliding the mode change switch 13, the CPU 36 sequentially reads out the image data of the VGA type stored in the flash memory 31 in accordance with depression of the "+" key 16 or "-" key 17 and transfers the read image data to the compander 30 to thereby expand the image data, and then stores the resulting data in the DRAM 29. Thereafter, the CPU 36 transfers the image data stored in the DRAM 29 to the signal generator 25, which adds a sync signal to the received image data to produce a video signal, then delivers the video signal via the VRAM 26, D/A converter 27, and buffer 28 to the display unit 12 to thereby reproduce and display an image on the display screen of the display unit 12.

The I/O (Input/Output) port 37 is an interface which controls the input/output of serial data (image, control data, etc.) transmitted between the digital camera 2 and the printer 3 (external device) connected via the serial input/output terminal 18 and communication cable 4.

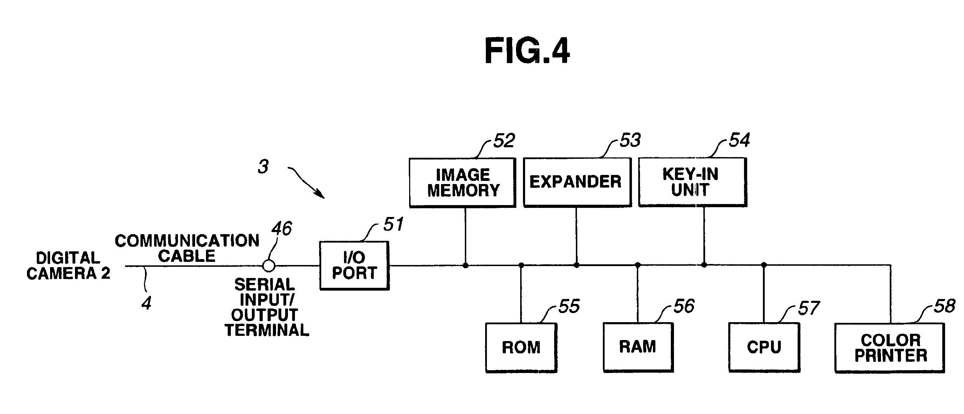

FIG. 4 is a block diagram of the printer 3 of FIG. 1 which is capable of receiving image data of the VGA and Q-VGA type from an external device (digital camera 2) via the communication cable 4, and performs a color printing process on the printing paper 5 on the basis of the image data of the Q-VGA type. That is, when the printer 3 receives image data of the Q-VGA type it converts the image data to that of the Q-VGA type, and then performs a printing process.

In FiG. 4, the printer 3 is composed of an I/O port 51, an image memory 52, an expander 53, a key-in unit 54, a ROM 55, a RAM 56, a CPU 57, and a color printing unit 58.

The I/O port 51 is an interface which controls the input/output of serial data (image data, control data, etc.) transmitted between the digital camera 2 (external device) and the printer 3 via the serial input/output terminal 46 and communication cable 4.

The image memory 52 stores image data of the VGA or Q-VGA type compressed, for example, in a JPEG system transferred from the digital camera (external device) 2 and image data decoded and expanded by the expander 53.

The expander 53 decodes and expands image data of the VGA or Q-VGA type compressed, for example, in the JPEG system and then delivers the expanded data to the image memory 52.

The key-in unit 54 is composed of the power supply switch 42, "+" key 43, "-" key 44, and print key 45, and outputs and delivers to the CPU 57 a signal depending on depression of a respective one of the key.

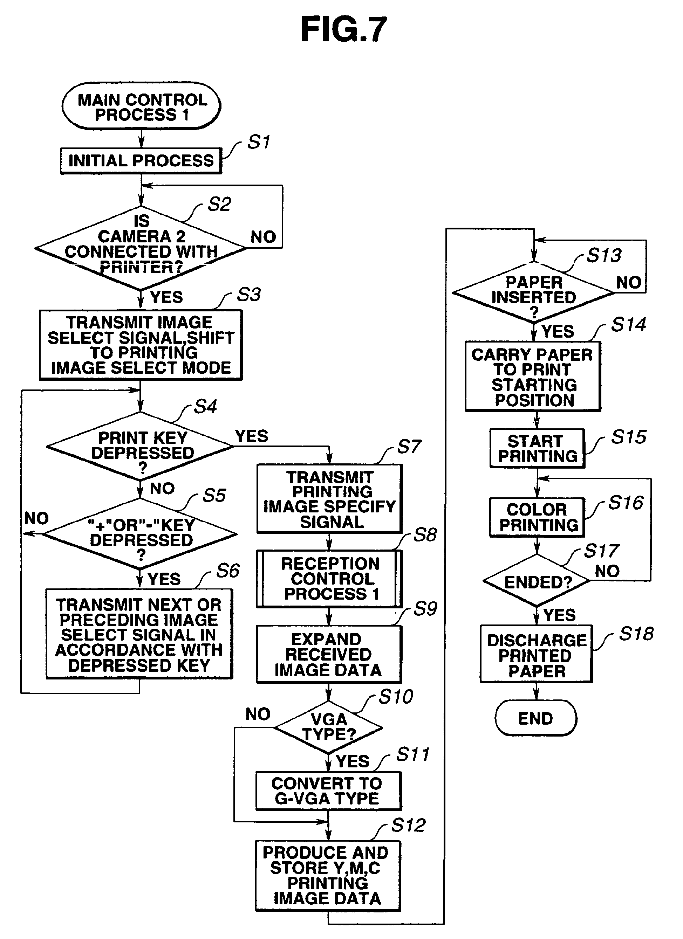

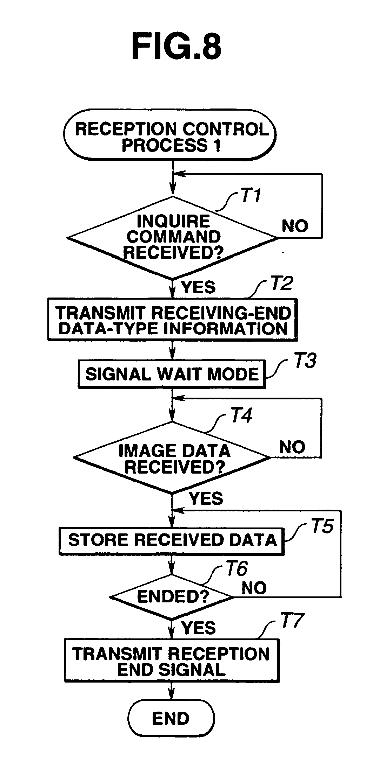

The ROM 55 contains various control programs such as a main control process 1 (FIG. 7) and a reception control process 1 (FIG. 8) set as a subroutine of the main control process 1 for control of the respective elements of the printer 3 by the CPU 57. The respective control programs are stored in the form of codes readable by the CPU 57.

When the image data stored in the image memory 52 is of the VGA type, the ROM 55 contains a data-type conversion program which converts the image data stored in the image memory 52 to that of the Q-VGA type to perform a printing process on the basis of the image data of the VGA type, and also contains a reception data-type storage table 56a (FIG. 5) to be developed in the RAM 56.

When the respective control processes are executed by the CPU 57, the RAM 56 forms as a work area which temporarily stores various data to be processed. The reception data-type storage table 56a read out from the ROM 55 by the CPU 57 is developed in the RAM 56.

FIG. 5 illustrates one example of the reception data-type storage table 56a developed in the RAM 56. In the reception data-type storage table 56a, a "reception data type" column contains data-type name data (in the present embodiment, VGA, Q-VGA) of image data receivable in the printer 3, and a corresponding "priority" column contains numerical (priority) data which determines the priority of reception of a respective data type in accordance with a printing process performed in the printer 3.

The printer 3 is capable of receiving image data of the VGA and Q-VGA types, but is only capable of printing image data of the Q-VGA type. Thus, if the connected external device is capable of transmitting image data of the two types, and even when the printer 3 receives image data of a higher resolution (quality) image data (i.e., of the VGA type), the communication time would increase, the data type would be required to be converted to the Q-VGA type, which would be demerits of the printer 3. Thus, as the priority data, the Q-VGA and VGA types are set as "1" and "2", respectively, as shown in FIG. 5. That is, the Q-VGA type is set as having higher priority than the VGA type.

The data (receivable data-type name data and its priority data) stored in the reception data-type storage table 56a is transmitted via the communication cable 4 to the digital camera 2 (transmitting-end external device) in the reception control process 1 (FIG.8).

The CPU 57 controls the respective elements of the printer 3 in accordance with various control programs contained in the ROM 55. More specifically, when the power switch 42 is depressed to turn on the power supply, the CPU 57 executes the main control process 1 (FIG. 7) and the reception control process 1 (FIG. 8) set as a subroutine of the main control process 1.

As shown in FIG. 6, the color printing unit 58 is composed of a sensor 58a, motor drivers 58b, 58c and 58d, a head motor 58e, a ribbon feed motor 58f, a paper feed motor 58g, and a printing head 58h.

The sensor 58a is composed of an optical sensor or mechanical contact type sensor which senses the position of the printing head 58h and a cartridge ink ribbon (not shown) having a ribbon of color printing yellow (Y), magenta (M), and cyan (C) and also senses printing paper 5 inserted into the paper insert/discharge port 41.

The motor driver 58b is connected to a head motor 58e; the motor driver 58c to the ribbon feed motor 58f; and the motor driver 58d to the paper feed motor 58d. The respective motor drivers 58b, 58c and 58d drive and control the head motor 58e, ribbon feed motor 58f and paper feed motor 58g, respectively, in accordance with drive signals from the CPU 57.

The head motor 58e controls the positions of the printing head 58h and the cartridge ink ribbon. The ribbon feed motor 58f sequentially carries the ribbon placed between the printing head 58h and the printing paper 5 as the printing process proceeds. The printing paper feed motor 58g feeds the printing paper 5 inserted into the paper insert/discharge port 41 to a predetermined print start position, and when the image data is printed, is responsive to termination of the color printing process for one line in the scanning direction of the printing head 58h to move the printing paper 5 for the next one line, and returns the printed paper 5 to the paper insert/discharge port 41 and then discharges the printed paper out of the port 41.

The printing head 58h is composed of 960 heating elements whose density is, for example, 300 dpi (dots/inch) in a ceramic plate, and a driver which turns on/off and heat the heating elements individually in accordance with a drive signal from the CPU 57. The printing head 58h is depressed against the printing paper 5 in accordance with a drive signal from the CPU 57, so that the respective colors: yellow (Y), magenta (M), cyan (C) are transferred to the printing paper 5 by heat produced by the heating elements from a ribbon held between the printing head 58h and the printing paper 5. The color printing unit 58 sequentially heat transfers the three color Y, M and C to the printing paper 5 and prints a color image on the printing paper 5 under of the CPU 57.

### Operation:

The main control process 1 executed by the CPU 57 of the printer 3 will be described next with a flow chart of FIG. 7. When the power switch 42 is depressed to turn on the power supply, the CPU 57 reads out a program for the main control process 1 stored in the ROM 55 and starts the corresponding processing.

First, after initialization, the CPU 57 performs an initial process in which the reception data-type storage table 56a (FIG. 5) stored in the ROM 55 is developed in a predetermined region of the RAM 56 (step 51), and then determines whether the digital camera 2 (external device) is connected to the printer 3 (step S2) by determining whether a predetermined connection signal is inputted to the I/O port 51 from the digital camera 2 via the communication cable 4 and serial input/output terminal 46. As a result, if the digital camera 2 is not connected to the printer 3, the CPU 57 continuously monitors whether the digital camera 2 is connected to the printer 3.

When the CPU 57 determines that the digital camera 2 is connected to the printer at step S2, it transmits an image select signal to the digital camera 2 via the I/O port 51, serial input/output terminal 46, and communication cable 4, and then shifts to the printing image select mode (step S3).

When the CPU 36 of the digital camera 2 receives the image select signal, it first reads out image data, for example, of a storage number "1" from among 96 image data stored in the flash memory 31, causes the compander 30 to expand the read image data, causes the signal generator 25 to add a sync signal to the resulting image data to thereby produce a video signal, and then outputs the video signal to the display unit 12 and causes same to reproduce and display a corresponding image.

Then, the CPU 57 of the printer 3 determines whether the print key 45 is depressed (step S4). If not, the CPU 57 then determines whether the "+" key 43 or "-" key 44 is depressed (step S5).

When the CPU 57 determines that none of the keys 43 and 44 is depressed, it returns to step S4. If the CPU 57 determines that any one of the keys 43 and 44, for example the "+" key 43, is depressed, the CPU 57 transmits a next image select signal to the digital camera 2 or when the CPU 57 determines that the "-" key 44 is depressed, it transmits a preceding image select signal to the digital camera 2 (step S6), and then returns to step S4.

When the CPU 36 of the digital camera 2 receives any one of the next image select signal and the preceding image select signal, the CPU 36 reads out image data from the flash memory 31 in accordance with the received signal and displays the read-out image data on the display unit 12. For example, when the CPU 36 receives the next image select signal, and image data having a storage number "1" is displayed on the display unit, the CPU 36 reads out image data having the next storage number "2", which is one higher in number than the at present displayed image data, from the flash memory 31, and reproduces and displays the read image data on the display 12. If the CPU 36 receives the preceding image select signal and image data having a storage number "3" is displayed, it reads out image data having the immediately preceding storage number "2", which is one lower in number than the at present displayed data, from the flash memory 31, and reproduces and displays the read data on the display unit 12.

By employing such arrangement, the user is able to sequentially display the plurality of image data stored in the flash memory 31 of the digital camera 2 on the display 12 while retrieving an image to be printed. Also, by depressing the "+" key 16 or "-" key 17 of the digital camera 2 in the retrieval of an image to be printed, the image data stored in the flash memory 31 is displayed sequentially on the display 12 in ascending or descending order of storage number.

When the CPU 57 of the printer 3 determines at step S4 that the print key 45 has been depressed, the CPU 57 transmits to the digital camera 2 a printing image specifying signal which specifies as a printing image the image displayed on the display 12 of the digital camera 2 when the print key 45 is depressed (step S7), and then executes the reception control process 1 (FIG. 8) set as a subroutine of the main controi process 1 (step S8).

When the image data whose printing is specified in the reception control process 1 is stored from the digital camera 2 via the communication cable 4 and I/O port 51 into the image memory 54, the CPU 57 decodes and expands the image data stored in the image memory 52, using the expander 53 (step S9), and again stores the expanded image data in the image memory 52.

The CPU 57 determines whether the type of the image data stored in the image memory 52 is of the VGA type (step S10). If not, the CPU 57 shifts to step S12. If the CPU 57 determines at step S10 that the image data is of the VGA type, it reads out the data-type conversion program from the ROM 55 and converts the type of the image data from VGA to Q-VGA on the basis of the data-type conversion program (step S11).

Thereafter, the CPU 57 produces printing image data for the respective Y, M and C colors on the basis of this image data of the Q-VGA type and stores the printing image data in a predetermined area of the RAM 56 (step S12).

Then, the CPU 57 determines on the basis of a sensing signal from the sensor 58a of the color printing unit 58 whether or not printing paper 5 is inserted into the paper insert/discharge port 41 (step S13). If not, the CPU 57 continuously monitors whether the printing paper 5 is inserted.

When the CPU 57 determines at step S13 that the printing paper 5 is inserted, it transfers the printing paper 5 to a predetermined print starting position (step S14), starts a color printing process (step S15), drives the printing head 58h on the basis of the printing image data for the respective Y, M and C colors stored in the RAM 56, moves the printing paper 5 for the next one line as the printing head 58h ends the color printing for one line in the scanning direction, and then prints the color image concerned on the printing paper 5 (step S16).

Thereafter, the CPU 57 determines whether the printing process has ended (step S17). If not, the CPU 57 returns to step S16 to continue the printing process. When the CPU 57 determines that the printing process has ended, it discharges the printed paper 5 through the paper insert/discharge port 41 to the outside (step S18), and then ends the main control process 1.

The reception control process 1 executed as a subroutine of the main control process 1 will be described with reference to the flow chart of FIG. 8.

When the CPU 57 shifts to step S8 of the main control process 1, it reads out a program for the reception control process 1 stored in the ROM 55 and starts its processing.

First, the CPU 57 determines whether an inquire command (to inquire a type of receivable image data) from the digital camera 2 has been received (step T1). If so, the CPU 57 transmits the data-type name data and its priority data (receiving-end data-type information) contained in the reception data-type storage table 56a (FIG. 5) of the RAM 56 from the I/O port 51 via the communication cable 4 to the digital camera 2 (step T2), and then shifts to a reception wait mode or state (step T3).

The CPU 36 of the digital camera 2 is responsive to reception of the receiving-end data-type information to set a type of the image data to be transmitted in the transmission control process 1 (FIG. 9) and transmits the image data in the appropriate data type to the printer 3.

Then, the CPU 57 of the printer 3 determines whether or not the printer has received image data from the digital camera 2 (step T4). If so, the CPU 57 stores this image data in the image memory 52 (step T5), and then determines whether or not the reception of the image data has ended (step T6).

If the CPU 57 determines that reception of the image data has not ended, the CPU 57 shifts to step T5 to thereby continue reception of the image data. When the CPU 57 determines that the reception of the image data has ended, it transmits a reception end signal to the digital camera 2 (step T7), terminates the reception control process 1, and returns to step S9 of the main control process 1.

The transmission control process 1 executed by the CPU 36 of the digital camera 2 will be described with reference to the flow chart of FIG. 9.

When the mode change switch 13 is slid to specify a communicate mode, the CPU 36 reads out a program for the transmission control process 1 contained in the ROM 33, and starts processing on the program.

First, the CPU 36 performs an initial process such as develops in a predetermined region of the RAM 34 the data-type conversion table 34a (FIG. 3) contained in the ROM 33 (step U1), and determines whether or not the printer 3 (external device) is connected to the digital camera 2 (step U2). If not, the CPU 36 continuously monitors whether or not the printer 3 is connected to the digital camera 2.

When the CPU 36 determines at step U2 that the printer 3 is connected to the digital camera, it then determines whether or not the digital camera 2 has received an image select signal from the printer 3 (step U3). If so, the CPU 36 first reads out image data, for example, having a storage number "1 ", from among 96 image data stored in the flash memory 31, causes the compander 30 to expand this image data, causes the signal generator 25 to add a sync signal to the expanded image data to form a video signal, which is then outputted to the display unit 12 to reproduce and display the image data on the display unit 12 (step U4).

Thereafter, the CPU 36 determines whether or not it has received a printing image specify signal (step U5). If not, the CPU 36 then determines whether or not it has received a next image select signal or a preceding image select signal from the printer 3 (step U6).

When the CPU 36 determines that it has received none of those signals, it returns to step U5. When the CPU 36 determines that it has received any one of the two signals, it reads out image data stored in the flash memory 31 in accordance with the received signal, and reproduces and displays the image data on the display 12. For example, when the CPU 36 determines that it has received the next image select signal, and if the storage number of the image data reproduced and displayed at present on the display 12 is "1", the CPU 36 reads out image data of a next storage number data "2" from the flash memory 31 and reproduces and displays this data on the display 12. When the CPU 36 receives the preceding image select signal and the image data reproduced and displayed at present on the display unit 12 has storage number data "2", it reads out image data having an immediately preceding storage number "1" from the flash memory 31, and reproduces and display this data on the display unit 12 (step U7), and then returns to step U5.

When the CPU 36 determines at step U5 that it has received a printing image specify signal from the printer 3, it specifies the image data displayed at present on the display unit 12 as a printing image data (transmit image data) (step U8).

Thereafter, the CPU 36 transmits to the printer 3 an inquire command to inquire a type of receivable image data (step U9).

The CPU 36 then determines whether or not it has received receiving-end data-type information from the printer (step U10). If so, the CPU 36 compares this received information (receivable data-type name and its priority data: FIG. 5) and data in the "converted data type" column of the data-type conversion table 34a (FIG. 3) developed in the RAM 34 (step U11), selects a data type having the highest priority from among data types convertible (transmittable) by the digital camera 2 and receivable by the printer (step U12), and sets the selected data type as that of the image data to be transmitted (step U13).

Thereafter, the CPU 36 determines whether or not the set data type is that (VGA type) of the image data stored in the flash memory 31 (step U14). If so, the CPU 36 reads out the image data, whose printing is specified, from the flash memory 31, transmits this data from the I/O port 37 via the communication cable 4 to the printer 3 (step U15), and then shifts to step U20.

When the CPU 36 determines at step U14 that the set data type is not the VGA one, it first reads out the image data (having the VGA type), whose printing is specified, from the flash memory 31, transfers this image data to the compander 30 to cause same to expand the image data, and then stores the resulting image data in the DRAM (step U16).

Then, the CPU 36 refers to the data-type conversion table 34a (FIG. 3) of the RAM 34 to read out from the ROM 33 a data-type conversion program which converts the image data (having the VGA type) stored in the DRAM 29 to that having a data type set at step U12, converts the type of the image data from the VGA type to the set one (for example, Q-VGA or S-VGA) on the basis of the data-type conversion program, and stores the image data having the obtained type in the RAM 34 (step U17).

Thereafter, the CPU 36 transfers the image data stored in the RAM 34 to the compander 30 to cause same to compress the image data (step U18), and transmits this image data from the I/O port 37 via the communication cable 4 to the printer 3 (step U19). The CPU 36 then determines whether or not it has received a reception end signal from the printer 3 (step U20). If so, the CPU 36 terminates the transmission control process 1.

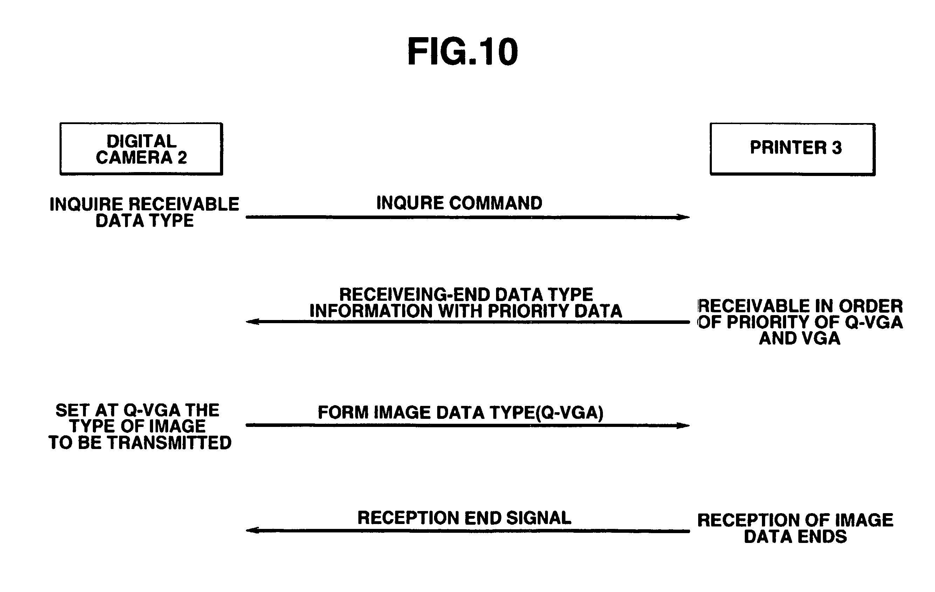

FIG. 10 illustrates a communication process in which image data is transferred from the digital camera 2 to the printer 3, using the transmission control process 1 (FIG. 9) executed in the digital camera 2 and the reception control process 1 (FIG. 8) executed by the printer 3, in the image communication system 1 of the present embodiment.

As shown in FIG. 10, the digital camera 2 transmits to the printer 3 an inquire command to inquire a type of printer-receivable image data (step U9). Receiving the inquire command, the printer 3 transmits to the digital camera 2 the printer-receivable data-type name data and its priority data (receiving-end data-type information) contained in the reception data-type storage table 56a (FIG. 5) of the RAM 56 (step T2). In this respect, the printer 3 of the present embodiment is capable of receiving image data having the Q-VGA and VGA types in this priority order, as shown in FIG. 5.

When the digital camera 2 receives the receiving-end data-type information from the printer 3, it compares this information with the data in the "converted data type" of the data-type conversion table 34a (FIG. 3) of the RAM 34 (step U11), to select one having the highest priority from among data types convertible (transmittable) by the camera 2 and receivable by the printer 3 (step U12), and sets this data type as that of image data to be transmitted (step U13). Then, the camera 2 reads out image data, whose printing is specified, from the flash memory 31, converts the type of the image data to the set data type as requested, and then transmits the image data to the printer 3 (steps U15, U19).

In this connection, the camera 2 of this particular embodiment is capable of storing image data in the VGA type, and transmitting the image data in the VGA, Q-VGA or S-VGA type. Thus, the camera 2 sets the type of the image data to be transmitted at the Q-VGA type on the basis of the receiving-end data type information (FIG. 5) from the printer 3, converts the type of the image data whose printing is specified to the Q-VGA type and transmits this image data to the printer 3.

Receiving this image data, the printer 3 stores this image data in the image memory 52 (step T5), and transmits to the camera 2 a reception end signal when its reception ends (step T7). When the camera 2 receives the reception end signal, it terminates the communication process involving transfer of the series of image data.

As is obvious from the above, according to the image communication system 1 of the present embodiment, the CPU 36 (setting means, receiving means, converting means, and image data transmitting unit) of the camera 2 (a transmitter) receives receiving-end data type information via the I/O port 37 (receiving means and image data transmitting means) from the printer 3 (receiver), and selects and sets, as a type of image data to be transmitted, a data type having the highest priority on the basis of priority data of the respective receivable data types included in the receiving-end data type information from among data types contained in the data-type conversion table 34a (first storage means) of the RAM 34, transmittable by the camera 2, receivable by the printer 3 and contained in the receiving-end data type information. The CPU 36 reads from the ROM 33 a data-type conversion program corresponding to the set data type by referring to the data-type conversion table 34a, converts the type of the image data to be transmitted to the set data type, and transmits this image data via the I/O port 37 to the printer 3.

Thus, the camera 2 is capable of transmitting to the printer 3 the image data in a data type suitable for printing performed by the printer 3. As a result, a possible wasteful communication time is eliminated, image data is transferred rapidly, no data type is required to be set manually in transfer of the image data, which improves handiness of this camera. By eliminating the wasteful communication time, possible wasteful power consumption of internal cells in the camera and printer 2 and 3 which wouid otherwise be produced is suppressed to thereby extend the service life of the cells.

According to the image communication system 1 of the present embodiment, the CPU 36 (converting means and setting means) of the camera 2 converts the type of the image data to be transmitted to the set data type when the set data type is different from that of the image data stored in the flash memory 31 (second storage means).

Thus, only when the type of the image data stored in the flash memory 31 is different from the set data type in transmission, the camera 2 converts to the set data type the type of the image data to be transmitted.

According to this image communication system 1 of the present embodiment, the type of the image data is set depending on a graphic display type (image display type).

Thus, the camera 2 is capable of transmitting to the printer 3 image data of a graphics display type suitable for the printing process performed by the printer 3.

### (Second Embodiment)

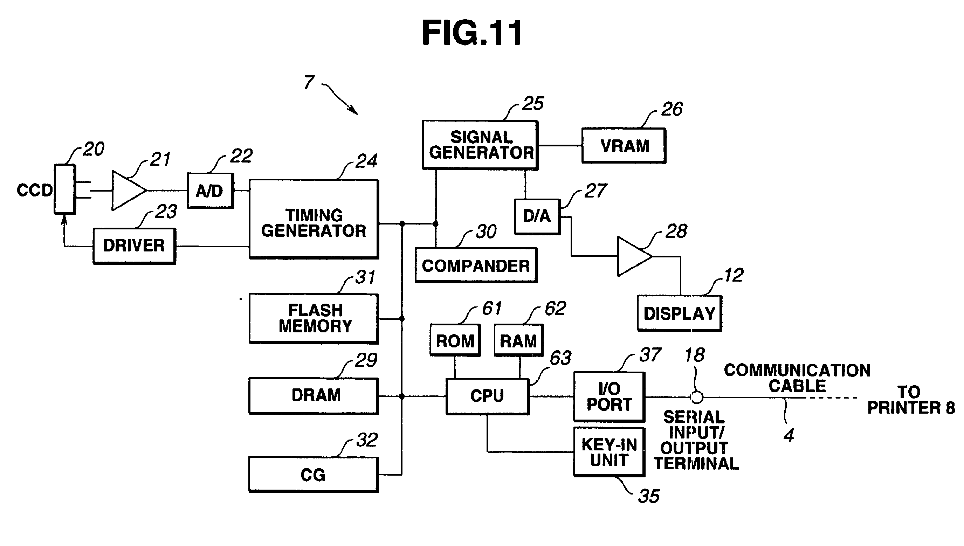

A second embodiment of the image communication system will be described next with reference to FIGS. 11-17. The image communication system 6 comprises a digital camera 7 and a printer 8 which are connected by a communication cable 4 like the image communication system 1 of the first embodiment. The compositions of the digital camera 7 and the printer 8 similar to those of the digital camera 2 and the printer 3 of the first embodiment, and the same element, for example, each key or terminal, is identified by the same reference numeral, and further description thereof will be omitted.

First, the digital camera will be described. While the digital camera 2 of the first embodiment produces image data of the VGA type on the basis of the picked-up image and stores this image data in the flash memory 31, the digital camera 7 of the present embodiment produces image data of the Q-VGA type on the basis of the picked-up image and stores this image data in a memory (flash memory 31), and transmits to an external device (printer 8) the image data in the Q-VGA, VGA or S-VGA type.

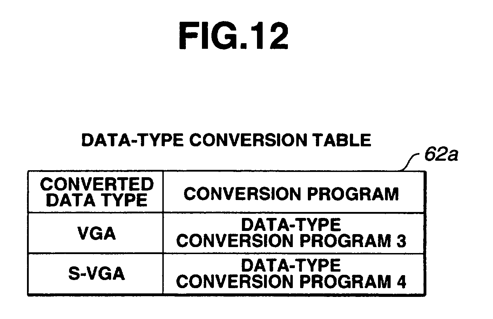

FIG. 11 is a block diagram of an internal composition of the camera 7. In FIGS. 11 and 12, the same component of the cameras 2 and 7 in the first and second embodiments is given the same reference numeral and further description thereof will be omitted.

In FIG. 11, the digital camera 2 is composed of a display unit 12, a CCD 20, a buffer 21, an A/D converter 22, a driver 23, a timing generator 24, a signal generator 25, a VRAM 26, a D/A converter 27, a buffer 28, a DRAM 29, a compander 30, a flash memory 31, a CG 32, an input unit 35, an I/O port 37, a ROM 61, a RAM 62, and a CPU 63 which are similar to the corresponding elements of the digital camera of FIG. 2.

The camera 7 produces image data of the Q-VGA type on the basis of the picked-up image, as described above. Thus, image data of the Q-VGA type is stored or developed in the flash memory 31 or DRAM 29.

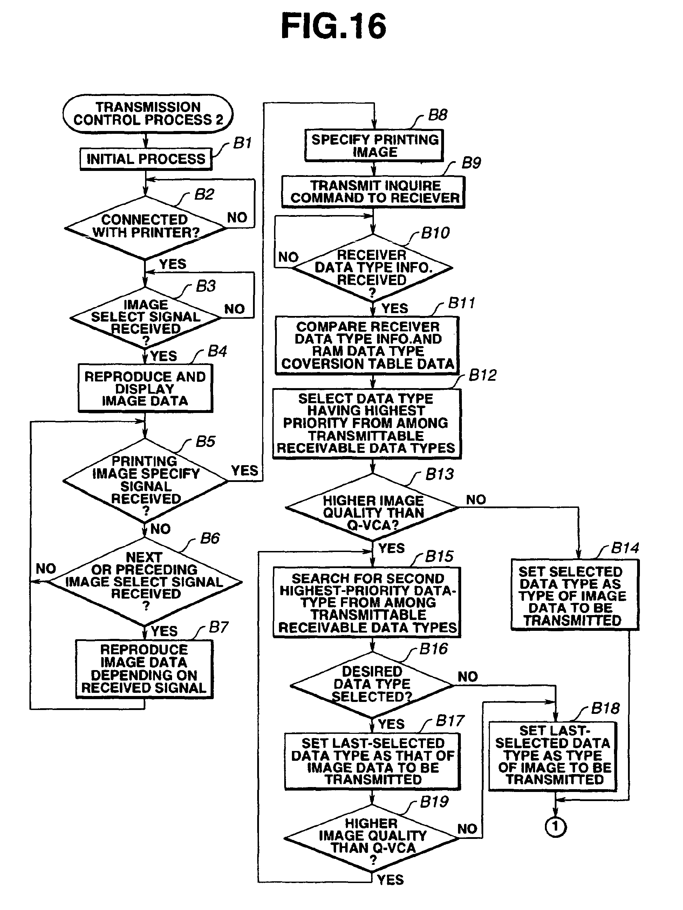

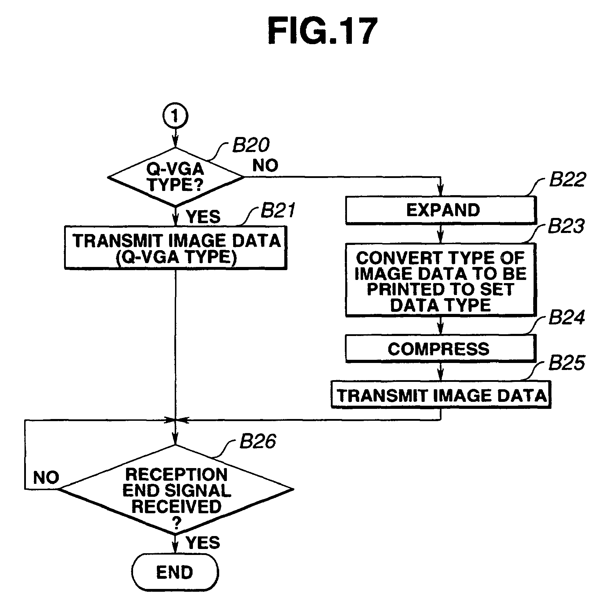

The ROM 61 contains various control programs for control of the appropriate elements of the camera 7 executed by a CPU 63 such as a transmission control process 2 (FIGS. 16 and 17) to be described later. The respective control programs are contained in the form of a program code readable by the CPU 63.

The ROM 61 contains data-type conversion programs which convert image data having the Q-VGA type stored in the flash memory 31 to image data having the VGA and S-VGA types and also contains a data-type conversion table 62a (FIG. 12) which will be developed in the RAM 62 and described later.

The RAM 62 forms a work area which temporarily stores various data to be processed when various control processes are executed by the CPU 63. A data-type conversion table 62a read out from the ROM 61 by the CPU 63 is developed in the RAM 62.

FIG. 12 illustrates one example of the data-type conversion table 62a to be developed in RAM 62 In the table 62a, a "converted data type" column contains type names of image data (in the present embodiment, Q-VGA, S-VGA) to which the type (VGA) of the image data stored in the flash memory 31 as a conversion source is convertible (transmittable) by the camera 2, and a "conversion program" column contains program names of data-type conversion programs in charge of type conversion corresponding to the respective type names of image data in the "converted data type" column.

The CPU 63 controls the respective elements of the digital camera 7 in accordance with various control programs contained in the ROM 61. Specifically, the CPU 63 is responsive to specifying of a communicate mode by sliding the mode change switch 13 to perform the transmission control process 2 (FIGS. 16 and 17).

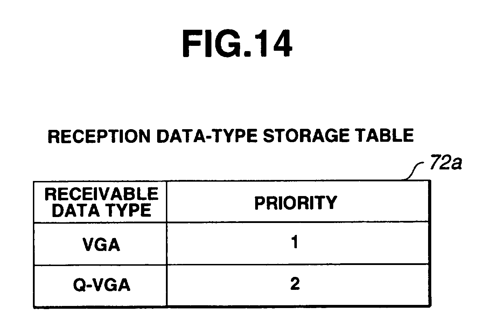

In the transmission control process 2, the CPU 63 receives receiving-end data type information (receivable data type name and its priority data, FIG. 14) via the I/O port 37 from the printer 8, compares the receiving-end data type information and the "converted data type" column data of the data-type conversion table 62a (FIG. 12) developed in the RAM 62 to select a data type of the highest priority from among data types convertible (transmittable) by the digital camera 7 and receivable by the printer 8.

Thereafter, when the CPU 63 determines that the selected data type has a higher image quality than that of the image data stored in the flash memory 31, it selects as the type of image data to be transmitted a data type of an image quality level closest to the selected data type and having an image quality level than the type of the image data stored in the flash memory 31 from among the transmittable receivable data types, and sets the selected data type. The CPU 63 then refers to the data-type conversion table 34a to read out a data-type conversion program corresponding to the set data type from the ROM 61, converts the type of the image data to be transmitted to the set data type, and then transmits this image data via the I/O port 37 to the printer 8.

The printer 8 will be described next. Like the printer 3 of the first embodiment, the printer 8 of the present embodiment is capable of receiving image data of the VGA and Q-VGA types from an external device (digital camera 7). In addition to the image data of the Q-VGA type, the printer 8 is capable of printing image data of the VGA type. When the printer 8 receives image data of the Q-VGA type, it performs a printing process on the basis of the image data of the Q-GVA type, while when it receives image data of the VGA type, it performs a printing process on the basis of the image data of the VGA type.

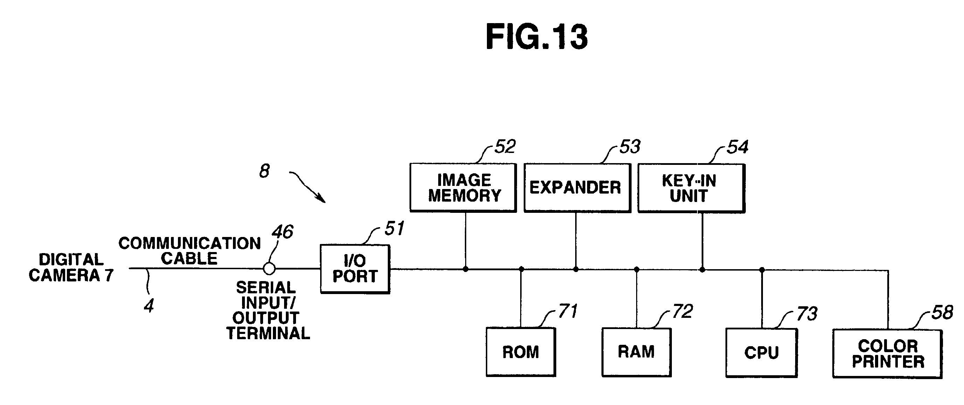

FIG. 13 is a block diagram of the printer 8. In FIGS. 13 and 14, the same element is given the same reference numeral and its further description will be omitted.

In FIG. 13, the printer 8 is composed of an I/O port 51, an image memory 52, an expander 53, a key-in unit 54, a color printing unit 58, a ROM 71, a RAM 72, and a CPU 73 similar to those corresponding ones of the printer of FIG. 4.

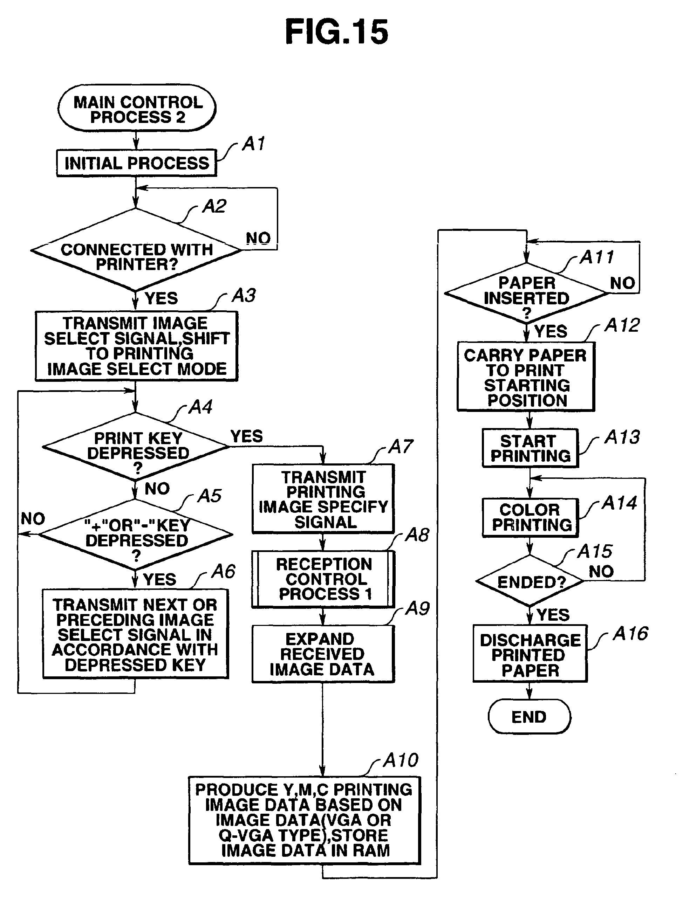

The ROM 71 contains various control programs such as a main control process 2 (FIG. 15) and the reception control process 1 (FIG. 8) set as a subroutine of the main control process 2 for control of the respective elements of the printer 8 by the CPU 73. The respective control programs are contained in the form of codes readable by the CPU 73. The ROM 71 also contains a reception data-type storage table 72a (FIG. 14) to be developed in the RAM 72.

When the respective control processes are executed by the CPU 73, the RAM 72 forms as a work area which temporarily stores various data to be processed. The reception data-type storage table 56a read out from the ROM 71 by the CPU 73 is developed in the RAM 72.

FIG. 14 illustrates one example of the reception data-type storage table 72a developed in the RAM 72. In the reception data-type storage table 72a, a "reception data type" column contains data-type name data (in the present embodiment, VGA, Q-VGA) of image data receivable in the printer 8, and a corresponding "priority" column contains numerical (priority) data which determines the priority of reception of a respective data type in accordance with a printing process performed in the printer 8.

The printer 8 is capable of receiving image data of the VGA and Q-VGA types. When the printer 8 receives image data of the VGA type, it performs a printing process on the basis of the image data of the VGA type while when it receives image data of the Q-VGA type, it performs a printing process on the basis of this image data. Usually, printing with image data of the VGA type provides a printed image of a higher quality than with the VGA data type, so that as shown in FIG. 14, the VGA type is set at higher priority ("1") than the Q-VGA type ("2").

The data (receivable data-type name data and its priority data) stored in the reception data-type storage table 72a is transmitted via the communication cable 4 to the digital camera 2 (transmitting-end external device) in the reception control process 1 (FIG.8) set as the subroutine of the main control process 2 (FIG. 15).

The CPU 73 controls the respective elements of the printer 8 in accordance with the various control programs contained in the ROM 71. More specifically, when the power switch 42 is depressed to turn on the power supply, the CPU 73 executes the main control process 2 (FIG. 15) and the reception control process 1 (FIG. 8) set as the subroutine of the main control process 2.

Before the operation of the inventive image communication system 6 is described, its several important points will be outlined.

As described in the composition of this embodiment, its digital camera 7 is capable of storing picked-up image data in the Q-VGA type in the flash memory 31, and transmitting to the printer 8 the image data in the Q-VGA, VGA or S-VGA type.

The printer 8 is capable of receiving from the digital camera 7 image data of the VGA and Q-VGA types. When the printer 8 receives image data of the VGA type, it performs a printing process on the basis of the image data of the VGA type while when it receives image data of the Q-VGA type, it performs a printing process on the basis of this image data. Usually, printing with image data of the VGA type provides a printed image of a higher quality than with the VGA data type, so that the VGA type is set at higher priority ("1") than the Q-VGA type ("2").

When the digital camera transmits image data to the printer 8 in the image communication system 6 and if the image communication system 6 takes the same control composition as that in the first embodiment, the digital camera 7 sets the type of image data to be transmitted at the VGA type on the basis of priority data from the printer 8, converts the image data of the Q-VGA type stored in the flash memory 31 to that of the VGA type, and then transmits this image data to the printer 8.

When the camera 7 converts the image data of the Q-VGA type to that of the VGA type, it only doubles the image data of the Q-VGA type in length and breadth, and the resulting data of the VGA type is the same in resolution as image data of the Q-VGA type. That is, even though the printer 8 performs a printing process on the basis of the image data of the VGA type, it can only obtain the result of the printing having the same image quality level (resolution) as it performs a printing process on the basis of the image data of the Q-VGA type. In such a case, transmission of image data of the Q-VGA type will suffice, but demerits such as an increase in the communication time, and useless data type conversion in the digital camera 7 would be produced due to transmission of image data of the VGA type.

The composition of the image communication system of this embodiment which will be described next eliminates the above problems and is intended to transfer image data in an optimal data type.

A main control process 2 (FIG. 15) performed by the CPU 73 of the printer 8 is substantially the same as the main control process 1 (FIG. 7) performed in the first embodiment except for the following:
The printer 3 of the first embodiment can only print image data of the Q-VGA type, so that when the image data received from the camera 2 takes the VGA type, the printer 3 converts the image data to that of the Q-VGA type at steps S10 and S11 of the flow chart of FIG. 7, and then performs a color printing process starting with steps S12 whereas the printer 8 of the present embodiment prints image data of both the VGA and Q-VGA types, so that its flow chart of FIG. 15 lacks processing steps corresponding to the steps S10 and S11. When the image data received from the camera 7 has the VGA type, the printer 8 performs a color printing process starting with step A10 on the basis of this image data of the VGA type while when the received data has the Q-VGA type, the printer 8 performs a color printing process on the basis of this image data of the Q-VGA type.

The reception control process 1 of FIG. 8 set as a subroutine of the main control process 2 is the same as that described with reference to the first embodiment. Thus, further description of the main control process 2 performed by the CPU 73 of the printer 8 and the reception control process 1 set as a subroutine of the main control process 2 will be omitted.

The transmission control process 2 performed by the CPU 63 of the digital camera 7 will be described next with reference to flow charts of FIGS. 16 and 17.

Since the transmission control process 2 has basically the same composition as the transmission control process 1 of FIG. 9 described with reference to the first embodiment, only unique portions of the present embodiment will be described next..

When the mode change switch 13 is slid to specify a communication mode, the CPU 63 reads out a program on the transmission control process 2 stored in the ROM 61, and starts its transmission control process at steps B1-B9 similar to the steps U1-U9 of the transmission control process 1 of FIG. 9

The CPU 63 then determines whether or not it has received receiving-end data-type information from the printer 8 (step B10). If so, the CPU 63 compares this received information (receivable data-type name and its priority data :FIG. 14) and data in the "converted data type" column of the data-type conversion table 62a (FIG. 12) developed in the RAM 62 (step B11), selects a data type having the highest priority from among data types convertible (transmittable) by the digital camera 7 and receivable by the printer 8 (step B12).

Thereafter, the CPU 63 determines whether or not the selected data type has a higher resolution (image quality) than the Q-VGA type of the image data stored in the flash memory 31 (step B13). If the selected data type is the Q-VGA type or a data type of a lower resolution, the CPU 63 sets the selected data type as a type of image data to be transmitted (step B14), and then shifts to step B20.

When the CPU 63 determines at step B13 that the selected data type is a type having a higher resolution than the Q-VGA type, the CPU 63 searches for a data type having the second priority of priority from among transmittable receivable data types (step B15), and determines whether this data type exists or not (step B16). If not, the CPU 63 sets the last-selected data type as the type of the image data to be transmitted (step B18), and then shifts to step B20.

When the CPU 63 determines at step B16 that the appropriate data type exists, it selects the data type (stepB17), and then determines whether the selected data type has a higher resolution than the data type (Q-VGA) of the image data stored in the flash memory 31 (step B19).

If not, the CPU 63 shifts to step B14 where it sets the last-selected data type as that of image data to be transmitted (step B14), and then shifts to step B20. When the CPU 63 determines at step B19 that the selected data type is a one having a higher resolution than the Q-VGA type, the CPU 63 returns to step B15.

By employing such control composition, the digital camera 7 recognizes the resolution (picture quality level) of the image data stored in the flash memory 31 on the basis of this type of the image data, and suppresses to the utmost transmission of the image data in a type having a picture quality level higher than the type of the image data of the transmission source. Even when the image data is required to be transmitted in a type having a picture quality level higher than the type of the image data of the transmission source, the image data is controlled so as to be transmitted in a data type having the closest possible image quality level to that of the image data of the transmission source.

The CPU 63 then determines whether or not that the data type set at step B14 or B17 is the type (Q-VGA) of the image data stored in the flash memory 31 (step B20). If so, the CPU 63 reads out image data, whose printing is specified, from the flash memory 31, transmits this image data from the I/O port 37 via the communication cable 4 to the printer 8 (step B21), and then shifts to step B26.

When the CPU 63 determines at step B20 that the set data type is not the Q-VGA type, it converts the type (Q-VGA) of the image data, whose printing is specified, to the data type set at step B14 or B17 and transmits this image data from the I/O port 37 via the communication cable 4 to the printer 8 (steps B22-B25). When the CPU 63 receives a reception end signal from the printer 8 (step B26), it terminates the transmission control process 2.

The use of such control composition serves to eliminates the problem that although prints of the same picture quality level can be only obtained, the type of the image data to be printed would be converted to a data type having a higher image quality level than its unconverted one on the basis of the priority data from the printer 8 and the resulting image data is transmitted. Compared to the control composition of the first embodiment, image data is transferred in a type optimal for the transmitting and receiving ends.

For example, infrared communication is applicable to the above embodiments, which will be described next.

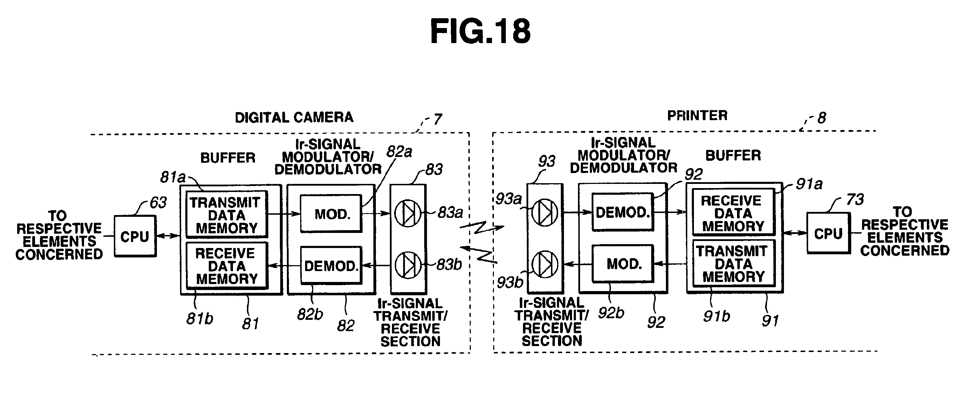

FIG. 18 is a block diagram of a circuit arrangement of a modification of the above system 6 which performs data transmission, using Ir DA (Infrared Data Association) system infrared communication, between the digital camera 7 and the printer 8.

In FIG. 18, the digital camera 7 is provided with a buffer 81, an Ir signal modulator/demodulator 82, and an 10 Ir-signal transmit/receive section 83.

The buffer 81 is connected to the CPU 63 and includes a transmit data memory 81a which temporarily stores image data, control data, etc., the transmission of which are specified and a receive data memory 81 b which temporarily stores data received from an external device (printer 8), using infrared communication.

The Ir-signal modulator/demodulator 82 is provided with a modulator 82a which modulates infrared with transmit data fed by the transmit data memory 81a of the buffer 81 to output a resulting Ir signal, and a demodulator 82b which demodulates an Ir signal fed from a receive LED (photodiode) 83b of the Ir-signal transmit/receive section 83.

The Ir signal transmit/receive section 83 is provided with a transmit LED 83a which transmits an Ir signal fed by the modulator 82a of the Ir-signal modulator/demodulator 82, and the photo-diode 83b which receives an Ir signal transmitted by the external device (printer 8) having an infrared communication function conforming to the IrdA standards.

The ROM 61 connected to the CPU 63 contains an (infrared communication control) program in charge of control of infrared communication.

The CPU 63 controls the driving of the respective elements of the digital camera 7 in accordance with the infrared communication control program to execute data communication with the external device, using an infrared pulse signal.

In FIG- 18, the printer 8 is provided with a buffer 91, an Ir-signal modulator/demodulator 92, and an Ir-signal transmit/receive section 93 in addition to the circuit arrangement of FIG. 13.
Since those elements 91, 92 and 93 are identical to the corresponding ones of the digital camera 7, further description thereof will be omitted.

The digital camera 7 and the printer 8, each having an infrared communication function, cooperate to perform, using infrared communication, a communication process involving transmission of a series of data such as is shown in the main control process 2 (FIG. 15), reception control process 1 (FIG. 8), and transmission control process 2 (FIGS. 16 and 17), so that image data is transferred from the digital camera 7 to the printer 8, using infrared communication.

As is obvious from the above, according to the image communication system 6 of the present embodiment, the CPU 63 (selecting means, receiving means, setting means, converting means, comparing means, converting means, and image data transmitting unit) of the camera 7 (transmitter) receives receiving-end data type information via the I/O port 37 (receiving means and image data transmitting means) from the printer 8 (receiver), and selects and selects, as a type of image data to be transmitted, a data type having the highest priority on the basis of priority data of the respective receivable data types included in the receiving-end data type information from among data types contained in the data-type conversion table 62a (first storage means) of the RAM 62, transmittable by the camera 7, receivable by the printer 8 and contained in the receiving-end data type information. Then, when the CPU 63 determines that the selected data type has a higher image quality than that of the image data stored in the flash memory 31 (second storage means), it selects and sets, as a type of image data to be transmitted, from among transmittable receivable data types a data type having a picture quality level closest to the selected image type and having quality level than the type of image data stored in the flash memory 31. The CPU 63 then reads from the ROM 61 a data-type conversion program corresponding to the set data type by referring to the data-type conversion table 34a, converts the type of the image data to be transmitted to the set data type, and transmits this image data via the I/O port 37 to the printer 8.

Thus, the camera 7 is capable of transmitting the image data to the printer 8 in an optimal data type in consideration of the printing process performed by the printer 8 and the image quality level of the image data stored in the flash memory. As a result, a wasteful communication time which would otherwise be produced is eliminated, image data is transferred rapidly, no data type is required to be set manually in transfer of the image data, which improves handiness of this camera. By eliminating the wasteful communication time, wasteful power consumption of internal cells in the camera and printer 2 and 3 which would otherwise be produced is suppressed to thereby extend the service life of the cells.

According to the image communication system 6 of the present embodiment, the CPU 63 (converting means and setting means) of the camera 7 converts the type of the image data to be transmitted to the set data type when the set data type is different from that of the image data stored in the flash memory 31 (second storage means).

Thus, only when the type of the image data stored in the flash memory 31 is different from the set data type in transmission, the camera 7 converts to the set data type the type of the image data to be transmitted.

While the present invention has been described with reference to the first and second embodiments, the present invention is not limited to the above embodiments, and many changes and modification are possible without departing from the spirit and scope of the invention.

For example, while in the first and second embodiments, transfer of image data of a stationary picture has been described, the image data to be transferred is not limited to that of the stationary picture, but may be that of an animation, of course.

While in the first and second embodiments application of the present invention to the type of the image data set on the basis of image display types such as VGA and Q-VGA has been illustrated, the present invention may also be applicable to the type of image data set on the basis of, for example, a color different signal pixel composition (4:2:2 format, 4:1:1 format or the like) and the compression/expansion system of image data.

While in the first and second embodiments the image data is illustrated as transferred, using cable communication via the communication cable 4, the image data may be transferred by radio communication including infrared communication in an infrared data association system.

In the first and second embodiments application of the present invention to the image communication systems 1 and 6 which include the digital cameras 2, 7 (transmitters) and printers 3, 8 (receivers) has been described, the transmitter and receiver (electronic devices) which constitute the image communication systems are not limited to the digital cameras 2 and 7 and printers 3 and 8, of course.

## Claims

1. A transmitter (2; 7) capable of transmitting an image data in a selected one of a plurality of data types, comprising:
a first storage means (33; 61) for pre-storing a piuraiity of data type information items each representing a respective one of the plurality of data types in which said transmitter (2; 7) is capable of transmitting image data;
a receiving means (37) for receiving a plurality of data type information items transmitted by a receiver (3; 8);
a selecting means (36; 63) for selecting a data type indicated by a data type information item having a highest priority from among an intersection of the plurality of data type information items pre-stored in said first storage means (33; 61) and the plurality of data type information items received by the receiving means (37);
a setting means (36; 63) for setting, as a data type in which said transmitter (2; 7) transmits image data to said receiver (3; 8), the data type selected by the selecting means (36; 63);
a converting means (36; 63) for converting the data type, in which said transmitter (2; 7) transmits the image data to said receiver (3; 8), to the data type set by said setting means (36; 63); and
an image data transmitting means (37) for transmitting to said receiver (3; 8) the image data in the type converted by said converting means (36; 63),
**characterized in that**
the receiving means (37) is adapted to further receive a plurality of priority data items transmitted by the receiver (3;8) , each priority data item corresponding to one of the plurality of data type information items and vice versa, said priority data item indicating a priority of the corresponding data type information item; and
the selecting means (36; 63) is adapted to select the data type having the highest priority on the basis of the plurality of priority data items received by said receiving means (37).

2. A transmitter (2; 7) according to claim 1 further comprising:
a second storage means (31) for storing image data in a predetermined data type,
and wherein the converting means (36; 63) is responsive to the data type set by the setting means (36; 63) being different from that of the image data stored in said second storage means (31) to convert the data type, in which the transmitter (2; 7) transmits the image data, to the data type set by the setting means (36; 63).

3. A transmitter (2; 7) according to claim 2 further comprising
a comparing means (36; 63) for comparing an image quality level of the data type selected by the selecting means (36; 63) with that of the data type of the image data stored in said second storage means (31); and
wherein the data stored in the second storage means (31) has a predetermined image quality level; and wherein the setting means is responsive to said comparing means (36; 63) so as to select and set, as the data type in which said transmitter (2; 7) transmits the image data to said receiver (3; 8), a data type having an image quality level closest to that of the data type of the image data stored in said second storage means (31) from among the plurality of transmittable and receivable data types.

4. A receiver (3; 8) capable of receiving image data in a selected one of a plurality of data types, comprising:
a storage means (55; 71) for pre-storing a plurality of data type information items each representing a respective one of the plurality of data types in a selected one of which said receiver (3; 8) is capable of receiving image data;
a transmitting means (51) for transmitting to said transmitter (2; 7) the plurality of data type information items stored in said storage means (55; 71); and
image data receiving means (51) for receiving image data transmitted in a selected one of the plurality of data types by a transmitter (2; 7),
**characterized in that**
the storage means (55; 71) is adapted to further store a plurality of priority data items, each priority data item corresponding to one of the plurality of data types and vice versa; and
the transmitting means (51) is adapted to further transmit to said transmitter (2; 7) the plurality of priority data items stored in said storage means (55; 71).

5. An image communication system (1) comprising a transmitter (2; 7) according to any of claims 1 to 3 and a receiver (3; 8) according to claim 4.

6. An image communication system (1) according to claim 5, wherein the data type in which said transmitter (2; 7) transmits the image data to said receiver (3; 8) is set depending on a type of displaying the image.

7. A communication control method for a transmitter capable of transmitting an image data in a selected one of a plurality of data types, comprising the steps of:
pre-storing (U1; B1) a plurality of data type information items each representing a respective one of the plurality of data types in which said transmitter is capable of transmitting image data;
receiving (U10; B10) a plurality of data type information items transmitted by 3 receiver; and
selecting (U12; B12) a data type indicated by a data type information item having a highest priority from among the intersection of the plurality of pre-stored data type information items and the plurality of received data type information items;
setting (U13; B14, B17), as a data type in which said transmitter transmits image data to said receiver, the data type selected by the selecting step (U12; B12);
converting (U17; B23) the data type, in which said transmitter transmits the image data to said receiver, to the data type set by said setting step; and
transmitting (U15, U19; B21, B25) to said receiver the image data in the type converted by said converting step,
**characterized in that**
the receiving step (U10; B10) comprises receiving a plurality of priority data items transmitted by the receiver, each priority data item corresponding to one of the plurality of data type information items and vice versa, said priority data item indicating a priority of the corresponding data type information item; and the selecting step (U12; B12) comprises selecting the data type having the highest priority on the basis of the plurality of priority data items received by said receiving step.

8. A communication control method for a transmitter according to claim 7 further comprising the steps of:
storing image data in a predetermined data type,
and wherein the step of converting (U17; B23) is responsive to the data type set by the setting step (U13; B14, B17) being different from that of the image data stored in said storing step to convert the data type, in which the image data is transmitted, to the data type set by the setting step (U13; B14, B17).

9. A communication control method for a transmitter according to claim 8 further comprising the steps of:
comparing (B13, B19) an image quality level of the data type selected by the selecting step (B12) with that of the data type of the image data stored in said storing step;
and wherein the image data stored in said storing step has a predetermined image quality level;
and wherein the setting step (B14, B17) is responsive to said comparing step (B13, B19) so as to select and set, as the image data is transmitted to said receiver, a data type having an image quality level closest to that of the data type for the image data stored in said storing step from among the plurality of transmittable and receivable data types.

10. A communication control method for a receiver capable of receiving image data in a selected one of a plurality of data types, comprising:
pre-storing a plurality of data-type information items each representing a respective one of the plurality of data types in a selected one of which said receiver is capable of receiving image data;
transmitting (T2) to said transmitter the plurality of data type information items stored in said pre-storing step; and
receiving (T4) image data transmitted in a selected one of the plurality of data types by a transmitter,
**characterized in that**
the storage step further comprises storing a plurality of priority data items, each priority data item corresponding to one of the plurality of data types and vice versa; and
the transmitting step (T2) further comprises transmitting to said transmitter the plurality of priority data items stored in said storage means.

11. A communication control method for an image communication system comprising a communication control method for a transmitter according to any of claims 7 to 9 and a communication control method for a receiver according to claim 10.

12. A communication control method for an image communication system according to claim 11, wherein the data type in which said image data is transmitted to said receiver is set depending on a type of displaying the image.

## Patentansprüche

1. Transmitter (2; 7), der in der Lage ist, Bilddaten in einer aus einer Mehrzahl von Datenarten ausgewählten Datenart zu übertragen, umfassend:
eine erste Speichereinrichtung (33; 61) zur Vorabspeicherung einer Mehrzahl von Datenartinformationseinheiten, die jeweils eine der Mehrzahl der Datenarten repräsentieren, in der der Transmitter (2; 7) in der Lage ist, Bilddaten zu übertragen;
eine Empfangseinrichtung (37) zum Empfangen einer Mehrzahl von Datenartinformationseinheiten, die durch einen Empfänger (3; 8) übertragen werden;
eine Auswahleinrichtung (36, 63) zur Auswahl einer Datenart, die durch eine Datenartinformationseinheit angegeben wird, die die höchste Priorität in der Schnittmenge aus der in der ersten Speichereinrichtung (33; 61) vorab gespeicherten Mehrzahl von Datenartinformationseinheiten und der von der Empfangseinheit (37) empfangenen Mehrzahl von Datenartinformationseinheiten hat;
eine Einstelleinrichtung (36, 63) zur Einstellung der von der Auswahleinrichtung (36, 63) ausgewählten Datenart als Datenart, in der der Transmitter (2; 7) die Bilddaten an den Empfänger (3; 8) überträgt;
eine Umwandlungseinrichtung (36, 63) zur Umwandlung der Datenart, in der der Transmitter (2; 7) die Bilddaten zu dem Empfänger (3; 8) überträgt, in die durch die Einstelleinrichtung (36, 63) eingestellte Datenart; und
eine Bilddatenübertragungseinrichtung (37) zur Übertragung der Bilddaten in der durch die Umwandlungseinrichtung (36, 63) umgewandelten Art an den Empfänger (3; 8),
**dadurch gekennzeichnet , dass**
die Empfangseinrichtung (37) eingerichtet ist, um des Weiteren eine Mehrzahl von durch den Empfänger (3; 8) übertragenen Prioritätsdateneinheiten zu empfangen, wobei jede Prioritätsdateneinheit einer der Mehrzahl von Datenartinformationseinheiten entspricht und umgekehrt, und jede Prioritätsdateneinheit eine Priorität der zugehörigen Datenartinformationseinheit angibt; und
die Auswahleinrichtung (36; 63) eingerichtet ist, um die Datenart auszuwählen, die die höchste Priorität hat, auf Basis der Mehrzahl der Prioritätsdateneinheiten, die durch die Empfangseinrichtung (37) empfangen wurden.

2. Transmitter (2; 7) gemäß Anspruch 1, des Weiteren umfassend:
eine zweite Speichereinrichtung (31) zur Speicherung von Bilddaten in einer vorbestimmten Datenart,
und wobei die Umwandlungseinrichtung (36; 63), wenn die durch die Einstelleinrichtung (36; 63) eingestellte Datenart sich von der Datenart der in der zweiten Speichereinrichtung (31) gespeicherten Bilddaten unterscheidet, die Datenart, in der der Transmitter (2; 7) die Bilddaten überträgt, in die Datenart umwandelt, die durch die Einstelleinrichtung (36; 63) eingestellt ist.

3. Transmitter (2; 7) nach Anspruch 2, des Weiteren umfassend
eine Vergleichseinrichtung (36; 63) zum Vergleichen eines Bildqualitätsgrades der durch die Auswahleinrichtung (36; 63) ausgewählten Datenart mit dem Bildqualitätsgrad der Datenart der in der zweiten Speichereinrichtung (31) gespeicherten Bilddaten; und
wobei die in der zweiten Speichereinrichtung (31) gespeicherten Daten einen vorbestimmten Bildqualitätsgrad haben; und wobei die Einstelleinrichtung auf die Vergleichseinrichtung (36; 63) eingeht, um eine Datenart als die Datenart, in der der Transmitter (2; 7) die Bilddaten an den Empfänger (3;8) überträgt, aus der Mehrzahl von übertragbaren und empfangbaren Datenarten auszuwählen und einzustellen, die einen Bildqualitätsgrad hat, der dem der Datenart der in der zweiten Speichereinrichtung (31) gespeicherten Bilddaten am nächsten kommt.

4. Empfänger (3; 8), der in der Lage ist, Bilddaten in einer aus einer Mehrzahl von Datenarten ausgewählten Datenart zu empfangen, umfassend:
eine Speichereinrichtung (55; 71) zur Vorabspeicherung einer Mehrzahl von Datenartinformationseinheiten, die jeweils eine der Mehrzahl der Datenarten repräsentieren, und wobei der Empfänger (3; 8) in der Lage ist, Bilddaten in einer aus diesen Datenarten ausgewählten Datenart zu empfangen;
eine Übertragungseinrichtung (51) zur Übertragung der in der Speichereinrichtung (55; 71) gespeicherten Mehrzahl von Datenartinformationseinheiten an den Transmitter (2; 7) und
Bilddatenempfangseinrichtung (51) zum Empfangen von Bilddaten, die in einer aus der Mehrzahl von Datenarten ausgewählten Datenart durch einen Transmitter (2; 7) übertragen werden,
**dadurch gekennzeichnet, dass**
die Speichereinrichtung (55; 71) eingerichtet ist, um des Weiteren eine Mehrzahl von Prioritätsdateneinheiten zu speichern, wobei jede Prioritätsdateneinheit einer der Mehrzahl von Datenarten entspricht und umgekehrt; und
die Übertragungseinrichtung (51) eingerichtet ist, um des Weiteren die in der Speichereinrichtung (55; 71) gespeicherte Mehrzahl von Prioritätsdateneinheiten an den Transmitter (2; 7) zu übertragen.

5. Bildkommunikationssystem (1) mit einem Transmitter (2; 7) nach einem der Ansprüche 1 bis 3 und einem Empfänger (3; 8) nach Anspruch 4.

6. Bildkommunikationssystem (1) nach Anspruch 5, wobei die Datenart, in der der Transmitter (2; 7) die Bilddaten an den Empfänger (3; 8) überträgt, in Abhängigkeit von einer Art der Anzeige der Bilder eingestellt ist.

7. Kommunikationssteuerverfahren für einen Transmitter, der in der Lage ist, Bilddaten in einer aus einer Mehrzahl von Datenarten ausgewählten Datenart zu übertragen, mit den Schritten:
Vorabspeichern (U1; B1) eine Mehrzahl von Datenartinformationseinheiten, die jeweils eine der Mehrzahl der Datenarten repräsentieren, in denen der Transmitter Bilddaten übertragen kann;
Empfangen (U10, B10) eine Mehrzahl von Datenartinformationseinheiten, die durch einen Empfänger übertragen werden; und
Auswählen (U12, B12) einer Datenart, die durch eine Datenartinformationseinheit angegeben wird, die die höchste Priorität in der Schnittmenge aus der Mehrzahl der vorab gespeicherten Datenartinformationseinheiten und der Mehrzahl der empfangenen Datenartinformationseinheiten hat;
Einstellen (U3; B14; B17) der durch den Auswählschritt (U12; B12) ausgewählten Datenart als eine Datenart, in der der Transmitter Bilddaten an den Empfänger überträgt;
Umwandeln (U17, B23) der Datenart, in der der Transmitter die Bilddaten an den Empfänger überträgt, in die durch den Einstellschritt eingestellte Datenart; und
Übertragen (U15, U19; B21, B25) der Bilddaten in der durch den Umwandlungsschritt umgewandelten Datenart an den Empfänger,
**dadurch gekennzeichnet dass,**
der Empfangsschritt (U10, B10) den Empfang einer durch den Empfänger übertragenen Mehrzahl von Prioritätsdateneinheiten umfasst, wobei jede Prioritätsdateneinheit einer der Mehrzahl von Datenartinformationseinheiten entspricht und umgekehrt, und wobei die Prioritätsdateneinheiten eine Priorität der zugehörigen Datenartinformationseinheit angeben; und
der Auswahlschritt (U12; B12) die Auswahl der Datenart umfasst, die die höchste Priorität hat, auf Basis der Mehrzahl der Prioritätsdateneinheiten, die durch den Empfangsschritt empfangen wurden.

8. Kommunikationssteuerverfahren für einen Transmitter nach Anspruch 7, des Weiteren umfassend die Schritte:
Speicherung von Bilddaten in einer vorbestimmten Datenart,
und wobei der Umwandlungsschritt (U17; B23), wenn die durch den Einstellschritt (U13; B14, B17) eingestellte Datenart sich von der Datenart der in dem Speicherschritt gespeicherten Bilddaten unterscheidet, die Datenart, in der die Bilddaten übertragen werden, in die durch den Einstellschritt (U13; B14, B17) eingestellte Datenart umwandelt.

9. Kommunikationssteuerverfahren für einen Transmitter gemäß Anspruch 8, des Weiteren umfassend die Schritte:
Vergleichen (B13, B19) eines Bildqualitätsgrades der durch den Auswahlschritt (B12) ausgewählten Datenart mit dem der Datenart der durch den Speicherschritt gespeicherten Bilddaten;
und wobei die in dem Speicherschritt gespeicherten Bilddaten einen vorbestimmten Bildqualitätsgrad haben;
und wobei der Einstellschritt (B14, B17) auf den Vergleichsschritt (B13, B19) eingeht, um, wenn die Bilddaten an den Empfänger übertragen werden, eine Datenart aus der Mehrzahl der übertragbaren und empfangbaren Datenarten auszuwählen und einzustellen, die einen Bildqualitätsgrad hat, der dem der Datenart der in dem Speicherschritt gespeicherten Bilddaten am nächsten kommt.

10. Kommunikationssteuerverfahren für einen Empfänger, der in der Lage ist, Bilddaten in einer aus einer Mehrzahl von Datenarten ausgewählten Datenart zu empfangen, umfassend:
Vorabspeichern einer Mehrzahl von Datenartinformationseinheiten, die jeweils eine der Mehrzahl der Datenarten repräsentieren, wobei der Empfänger in der Lage ist, Bilddaten in einer aus dieser Mehrzahl von Datenarten ausgewählten Datenart zu empfangen;
Übertragen (T2) der in dem Vorabspeicherungsschritt gespeicherten Mehrzahl von Datenartinformationseinheiten an den Transmitter; und
Empfangen (T4) von Bilddaten, die in einer aus der Mehrzahl von Datenarten ausgewählten Datenart durch einen Transmitter übertragen wurden,
**dadurch gekennzeichnet, dass**
der Speicherschritt des Weiteren die Speicherung eine Mehrzahl von Prioritätsdateneinheiten umfasst, wobei jede Prioritätsdateneinheit einer der Mehrzahl von Datenarten entspricht und umgekehrt; und
der Übertragungsschritt (T2) des Weiteren die Übertragung der in der Speichereinrichtung gespeicherten Mehrzahl von Prioritätsdateneinheiten an den Transmitter umfasst.

11. Kommunikationssteuerverfahren für ein Bildkommunikationssystem mit einem Kommunikationssteuerverfahren für einen Transmitter nach einem der Ansprüche 7 bis 9 und einem Kommunikationssteuerverfahren für einen Empfänger nach Anspruch 10.

12. Kommunikationssteuerverfahren für ein Bildkommunikationssystem nach Anspruch 11, wobei die Datenart, in der die Bilddaten an den Empfänger übertragen werden, in Abhängigkeit von einer Art der Anzeige der Bilder eingestellt ist.

## Revendications

1. Emetteur (2 ; 7) capable de transmettre des données d'image ayant un type de données sélectionné parmi une pluralité de types de données, comprenant :
un premier moyen de stockage (33 ; 61) destiné à pré-stocker une pluralité d'éléments d'information de types de données représentant chacun un type de données respectif de la pluralité de types de données, dans lequel ledit émetteur (2 ; 7) est capable de transmettre des données d'image ;
un moyen de réception (37) destiné à recevoir une pluralité d'éléments d'information de types de données transmis par un récepteur (3 ; 8) ;
un moyen de sélection (36 ; 63) destiné à sélectionner un type de données indiqué par un élément d'information de type de données ayant une priorité la plus élevée parmi une intersection de la pluralité d'éléments d'information de types de données pré-stockés dans ledit premier moyen de stockage (33 ; 61) et de la pluralité d'éléments d'information de types de données reçus par le moyen de réception (37) ;
un moyen de définition (36 ; 63) destiné à définir, en tant que type de données dans lequel ledit émetteur (2 ; 7) transmet les données d'image audit récepteur (3 ; 8), le type de données sélectionné par le moyen de sélection (36 ; 63) ;
un moyen de conversion (36 ; 63) destiné à convertir le type de données, dans lequel ledit émetteur (2 ; 7) transmet les données d'image audit récepteur (3 ; 8), en type de données défini par ledit moyen de définition (36 ; 63) ; et
un moyen de transmission de données d'image (37) destiné à transmettre audit récepteur (3 ; 8) les données d'image ayant le type converti par ledit moyen de conversion (36 ; 63),
**caractérisé en ce que**
le moyen de réception (37) est adapté afin de recevoir également une pluralité d'éléments de données de priorité transmis par le récepteur (3 ; 8), chaque élément de données de priorité correspondant à l'un de la pluralité d'éléments d'information de types de données et inversement, ledit élément de donnée de priorité indiquant une priorité de l'élément d'information de type de données correspondant ; et
le moyen de sélection (36 ; 63) est adapté afin de sélectionner le type de données ayant la priorité la plus élevée sur la base de la pluralité d'éléments de données de priorité reçus par ledit moyen de réception (37).

2. Emetteur (2 ; 7) selon la revendication 1, comprenant en outre :
un second moyen de stockage (31) destiné à stocker des données d'image ayant un type de données prédéterminé,
et dans lequel le moyen de conversion (36 ; 63) répond au type de données défini par le moyen de définition (36 ; 63) qui est différent de celui des données d'image stockées dans ledit second moyen de stockage (31) afin de convertir le type de données, dans lequel l'émetteur (2 ; 7) transmet les données d'image, en le type de données défini par le moyen de définition (36 ; 63).

3. Emetteur (2 ; 7) selon la revendication 2, comprenant en outre
un moyen de comparaison (36 ; 63) destiné à comparer un niveau de qualité d'image du type de données sélectionné par le moyen de sélection (36 ; 63) avec celui du type de données des données d'image stockées dans ledit second moyen de stockage (31) ; et
dans lequel les données stockées dans le second moyen de stockage (31) possèdent un niveau de qualité d'image prédéterminé ; et dans lequel le moyen de définition répond audit moyen de comparaison (36 ; 63) de façon à sélectionner et à définir, en tant que type de données dans lequel ledit émetteur (2 ; 7) transmet les données d'image audit récepteur (3 ; 8), un type de données ayant un niveau de qualité d'image le plus proche possible de celui du type de données des données d'image stockées dans ledit second moyen de stockage (31) parmi la pluralité de types de données pouvant être transmis et reçus.

4. Récepteur (3 ; 8) capable de recevoir des données d'image ayant un type de données sélectionné parmi une pluralité de types de données, comprenant :
un moyen de stockage (55 ; 71) destiné à pré-stocker une pluralité d'éléments d'information de types de données représentant chacun un type de données respectif parmi la pluralité de types de données, dans l'un desquels ledit récepteur (3 ; 8) est capable de recevoir des données d'image ;
un moyen de transmission (51) destiné à transmettre audit émetteur (2 ; 7) la pluralité d'éléments d'information de types de données stockés dans ledit moyen de stockage (55 ; 71) ; et
un moyen de réception de données d'image (51) destiné à recevoir les données d'image transmises dans un type de données sélectionné parmi la pluralité de types de données par un émetteur (2 ; 7),
**caractérisé en ce que**
le moyen de stockage (55 ; 71) est également adapté afin de stocker une pluralité d'éléments de données de priorité, chaque élément de données de priorité correspondant à l'un de la pluralité de types de données et inversement ; et
le moyen de transmission (51) est adapté afin de transmettre également audit émetteur (2 ; 7) la pluralité d'éléments de données de priorité stockés dans ledit moyen de stockage (55 ; 71).

5. Système de communication d'images (1) comprenant un émetteur (2 ; 7) selon l'une quelconque des revendications 1 à 3 et un récepteur (3 ; 8) selon la revendication 4.

6. Système de communication d'images (1) selon la revendication 5, dans lequel le type de données dans lequel ledit émetteur (2 ; 7) transmet les données d'image audit récepteur (3 ; 8) est défini selon un type d'affichage de l'image.

7. Procédé de contrôle de communications destiné à un émetteur capable de transmettre des données d'image dans un type de données sélectionné parmi une pluralité de types de données, comprenant les étapes consistant à :
pré-stocker (U1 ; B1) une pluralité d'éléments d'information de types de données représentant chacun un type de données respectif parmi la pluralité de types de données dans lequel ledit émetteur est capable de transmettre des données d' image ;
recevoir (U10 ; B10) une pluralité d'éléments d'information de types de données transmis par un récepteur ; et
sélectionner (U12 ; B12) un type de données indiqué par un élément d'information de type de données ayant une priorité la plus élevée parmi l'intersection de la pluralité d'éléments d'information de types de données pré-stockés et de la pluralité d'éléments d'information de types de données reçus ;
définir (U13 ; B14 ; B17), en tant que type de données dans lequel ledit émetteur transmet des données d'image audit récepteur, le type de données sélectionné par l'étape de sélection (U12 ; B12) ;
convertir (U17 ; B23) le type de données, dans lequel ledit émetteur transmet les données d'image audit récepteur, en le type de données défini par ladite étape de définition ; et
transmettre (U15, U19 ; B21, B25) audit récepteur les données d'image dans le type converti par ladite étape de conversion,
**caractérisé en ce que**
l'étape de réception (U10 ; B10) comprend la réception d'une pluralité d'éléments de données de priorité transmis par le récepteur, chaque élément de données de priorité correspondant à l'un de la pluralité d'éléments d'information de types de données et inversement, ledit élément de données de priorité indiquant une priorité de l'élément d'information de type de données correspondant ; et
l'étape de sélection (U12 ; B12) comprend la sélection du type de données ayant la priorité la plus élevée sur la base de la pluralité d'éléments de données de priorité reçus par ladite étape de réception.

8. Procédé de contrôle de communications destiné à un émetteur selon la revendication 7, comprenant en outre les étapes consistant à :
stocker des données d'image dans un type de données prédéterminé,
et dans lequel l'étape de conversion (U17 ; B23) répond au type de données défini par l'étape de définition (U13 ; B14, B17) qui est différent de celui des données d'image stockées à ladite étape de stockage afin de convertir le type de données, dans lequel les données d'image sont transmises, en le type de données défini par l'étape de définition (U13 ; B14, B17).

9. Procédé de contrôle de communications destiné à un émetteur selon la revendication 8, comprenant en outre les étapes consistant à :
comparer (B13, B19) un niveau de qualité d'image du type de données sélectionné par l'étape de sélection (B12) avec celui du type de données des données d'image stockées à ladite étape de stockage ;
et dans lequel les données d'image stockées à ladite étape de stockage possèdent un niveau de qualité d'image prédéterminé ;
et dans lequel l'étape de définition (B14, B17) répond à ladite étape de comparaison (B13, B19) de façon à sélectionner et à définir, lorsque les données d'image sont transmises audit récepteur, un type de données ayant un niveau de qualité d'image le plus proche possible de celui du type de données pour les données d'image stockées à ladite étape de stockage parmi la pluralité de types de données pouvant être transmis et reçus.

10. Procédé de contrôle de communications destiné à un récepteur capable de recevoir des données d'image dans un type de données sélectionné parmi une pluralité de types de données, comprenant :
le pré-stockage d'une pluralité d'éléments d'information de types de données représentant chacun un type de données respectif parmi la pluralité de types de données, dans l'un desquels ledit récepteur est capable de recevoir des données d'image ;
la transmission (T2) audit émetteur de la pluralité d'éléments d'information de types de données stockés à ladite étape de pré-stockage ; et
la réception (T4) des données d'image transmises dans un type de données sélectionné parmi la pluralité de types de données par un émetteur,
**caractérisé en ce que**
l'étape de stockage comprend en outre le stockage d'une pluralité d'éléments de données de priorité, chaque élément de données de priorité correspondant à l'un de la pluralité de types de données et inversement ; et
l'étape de transmission (T2) comprend en outre la transmission audit émetteur de la pluralité d'éléments de données de priorité stockés dans ledit moyen de stockage.

11. Procédé de contrôle de communications destiné à un système de communication d'images comprenant un procédé de contrôle de communications destiné à un émetteur selon l'une quelconque des revendications 7 à 9 et un procédé de contrôle de communications destiné à un récepteur selon la revendication 10.

12. Procédé de contrôle de communications destiné à un système de communication d'images selon la revendication 11, dans lequel le type de données dans lequel lesdites données d'image sont transmises audit récepteur est défini selon un type d'affichage de l'image.
